# NEW EUROPEAN PATENT SPECIFICATION

(11) **EP 3 564 009 B2**
(45) Date of publication and mention of the opposition decision: **09.12.2026**
(45) Mention of the grant of the patent: 22.02.2023
(21) Application number: 17888298.1
(22) Date of filing: 28.12.2017
(51) Int. Cl.: C08J 5/18, C08J 7/06

(54) **BIAXIALLY ORIENTED POLYPROPYLENE FILM, METALLIZED FILM, AND CAPACITOR**
BIAXIAL AUSGERICHTETER POLYPROPYLENFILM, METALLISIERTER FILM UND KONDENSATOR
FILM DE POLYPROPYLÈNE À ORIENTATION BIAXIALE, FILM MÉTALLISÉ ET CONDENSATEUR

(30) Priority: 28.12.2016 JP 2016256161
(43) Date of publication of application: 06.11.2019
(73) Proprietor: Oji Holdings Corporation, Chuo-ku Tokyo 104-0061 (JP)
(72) Inventor: TOMINAGA,Takeshi, Tokyo 104-0061 (JP); SUEYOSHI,Michiko, Tokyo 104-0061 (JP); OKUYAMA,Yoshimune, Tokyo 104-0061 (JP); FUJISHIRO,Yoshikazu, Tokyo 104-0061 (JP); NAKATA,Masahiro, Tokyo 104-0061 (JP); ISHIWATA,Tadakazu, Tokyo 104-0061 (JP)
(74) Representative: Müller-Boré & Partner Patentanwälte PartG mbB
(86) International application number: PCT/JP2017/047353
(87) International publication number: WO 2018/124300

(56) References cited:
- EP-A1- 3 275 624
- EP-B1- 2 684 676
- WO-A1-2009/060944
- WO-A1-2013/105552
- WO-A1-2015/091839
- WO-A1-2015/146894
- WO-A1-2016/158353
- WO-A1-2016/158590
- WO-A1-2016/167328
- DE-T5- 112008 002 985
- JP-A- 2007 084 813
- JP-A- 2010 254 868
- JP-A- 2014 051 657
- JP-A- 2014 231 584
- JP-A- 2014 231 584
- US-A1- 2015 140 266
- US-A1- 2018 093 409
- Google search for "Hiroshi AWAYA, Guide for polarization microscope of high-molecular-weight material, pp. 105-120, 2001": no relevant hits found
- Google search for "Yutaka Awaya, Introduction to Polarization Microscopy of Polymeric Materials, pp. 105-120, 2001
- International union of pure and applied chemistry. Macromolecular division. Commission on polymer characterization and properties. Working party on structure and properties of commercial polymers. A.J.de Vries. Structure and properties of uni- and biaxially oriented polypropylene films: Part I-Structural Characterization Pure & Appl. Chem., Vol. 53, pages 1011-1037, !981
- https://www.dgne.co.ip/books-hooks/lSBN978- 4 900041 93 -6.htm; retrieved on January 27, 2025

## Description

The present invention relates to a biaxially stretched polypropylene film, a metallized film, and a capacitor.

A biaxially stretched polypropylene film has excellent electrical properties such as voltage resistance and low dielectric loss as well as high moisture resistance. By making use of these properties, a biaxially stretched polypropylene film is widely used for electronic and electrical devices as a dielectric film for capacitors, such as high-voltage capacitors, filter capacitors for various switching power supplies, converters, and inverters, and smoothing capacitors. Further, a polypropylene film is beginning to be used also as capacitors for inverter power supplies that control drive motors of electric cars, hybrid cars, and the like that are highly demanded in recent years.

In particular, a polypropylene film used in a capacitor for use in automobiles is exposed to a high temperature at the time of use, so that it is demanded that the polypropylene film is excellent in dimension stability, mechanical properties, voltage resistance, and the like in a high-temperature environment. For this reason, various studies are made in order to improve the heat resistance. Also, there is an increasing demand for achieving scale reduction and higher capacitance of the capacitor. In order to meet such a demand, studies are made to reduce the thickness of the film for the purpose of improving the electrostatic capacitance without changing the volume of the capacitor.

For example, Patent Document 1 discloses a biaxially stretched polypropylene film in which the crystallite size, the birefringence value (ΔNyz) with respect to the thickness direction, and the total volume of protrusions per one field of view are controlled to be within specific ranges.

Patent Document 2 discloses a stretched polypropylene film configured from a polypropylene resin in which the mesopentad fraction, the amount of copolymerization monomers other than propylene, and the like are controlled to be within specific ranges, where the planar orientation coefficient of the film is controlled to be within a predetermined range.

Patent Documents 3 to 5 disclose a polypropylene film in which the isotacticity, the mesopentad fraction, the crystallization degree, or the like of the polypropylene resin is controlled to be within a specific range.

Patent Document 6 discloses a polypropylene film obtained by radiation onto a pellet or a cast sheet of polypropylene resin having a high mesopentad fraction.

Patent Document 7 discloses a polypropylene film in which the mechanical strength and the surface structure of the film are optimized.
JP 2014 231584 A describes a biaxially oriented polypropylene film for a capacitor.
WO 2015/146894 A1 discloses a biaxially oriented polypropylene film.
WO 2016/167328 A1 relates to a biaxially stretched polypropylene film for a capacitor.

Patent Document 1: JP-5929838
Patent Document 2: JP-A-2014-55276
Patent Document 3: JP-3752747
Patent Document 4: JP-3791038
Patent Document 5: JP-5660261
Patent Document 6: JP-A-2014-231604
Patent Document 7: WO 2012/002123 A1

Patent Document 1 discloses that a capacitor excellent in heat resistance and voltage resistance for a long period of time can be obtained by controlling the crystallite size, the birefringence value (ΔNyz) with respect to the thickness direction, and the total volume of protrusions per one field of view of the polypropylene film to be within specific ranges. Further, Patent Document 1 discloses that, when orientation is given in the plane direction of the polypropylene film, the refractive index Nz in the thickness direction changes to increase the birefringence value ΔNyz, whereby the voltage resistance is improved.

Patent Document 2 discloses that the shrinkage ratio at 150°C and the rigidity can be improved to be at the same level as a polyethylene terephthalate film by controlling the mesopentad fraction of the polypropylene resin constituting the stretched polypropylene film, the amount of copolymerization monomers other than propylene, and the like to be within predetermined ranges and by controlling the planar orientation coefficient of the film to be within a specific range.

Patent Documents 3 to 5 disclose that the voltage resistance at a high temperature and the like are improved when the isotacticity, the mesopentad fraction, the crystallization degree, or the like of the polypropylene resin is controlled to be within a specific range.

Patent Document 6 discloses that the stretchability at the time of forming the film and the insulation breakdown strength of the film are made compatible with each other by radiation onto a pellet or a cast sheet of polypropylene resin having a high mesopentad fraction.

Patent Document 7 discloses that a polypropylene film having numerous protrusions having a small height on the surface of the film is suitable for use in a capacitor for alternating-current voltage.

However, when the present inventors have made studies on the polypropylene films disclosed in Patent Documents 1 to 7, it has been found out that a further improvement is demanded in view of stably producing a polypropylene film in which thickness reduction of the film and long-term durability in a high temperature environment are compatible with each other. In particular, a biaxially stretched polypropylene film having a small thickness is liable to generate fracture or poor stretching of the film by stretching at the time of production as compared with a polypropylene film having an ordinary thickness, and a further improvement is needed in this respect.

For example, the polypropylene film disclosed in Patent Document 1 has disadvantages such as (i) possibly generating thickness mottles due to non-uniformity of stretching when the film is continuously produced or generating fracture at the time of stretching in the x-axis direction (width direction) because of having a high orientation in the y-axis direction, whereby it may not be possible to produce the film continuously, or (ii) possibly having a poor durability for a long period of time (1000 hours or more as one example) in use at a high temperature and at a high voltage, as described before or as will be described later.

The film specifically disclosed in Patent Document 2 is a film having a thickness of about 20 µm, and the film specifically disclosed in Patent Document 6 is a film having a thickness of about 15 um. It cannot be stated that, in these documents, the problems of fracture and the like that can be generated when the polypropylene film is stretched to a smaller thickness are sufficiently studied. Further, since the polypropylene resin constituting the film disclosed in Patent Document 2 has a high stereoregularity, the polypropylene resin does not have a sufficient stretchability when the film is stretched to a smaller thickness, so that a fracture is liable to be generated. Moreover, [(Nx + Ny)/2] - Nz disclosed in Patent Document 2 is clearly different from the definition in the present embodiment, as will be described later. Also, the production method using radiation, such as disclosed in Patent Document 6, involves cumbersome steps and is not preferable for practical use in production facilities.

Improvement in voltage resistance by enhancing the stereoregularity and/or crystallization degree, such as disclosed in Patent Documents 3 to 5, and the thin film formability contradict with each other, and there may be cases in which the film cannot be continuously produced when the film has a small thickness. Further, the polypropylene films disclosed in Patent Documents 3 and 5 are not made by paying attention to the long-term durability (capacitance change rate) that can withstand a voltage load test over as many as 1000 hours, which is demanded particularly in a capacitor for use in automobiles in recent years, and it cannot be stated that these polypropylene films meet the severe demands of recent years related to long-term durability.

Patent Document 7 discloses that studies were made on compatibility between the element processability and the voltage resistance; however, the disclosure does not pay attention to stretchability at all. Further, since the film specifically disclosed in Patent Document 7 is a film having a thickness of 7 µm, it cannot be stated that, in this document, the problems of fracture and the like that can be generated when the polypropylene film is stretched to a smaller thickness are sufficiently studied.

Accordingly, an object of the present invention is to provide a biaxially stretched polypropylene film that can be suitably used in a capacitor for use in automobiles or the like, that is, a biaxially stretched polypropylene film that is excellent in long-term durability at a high temperature and at a high voltage though having a small thickness, and is also excellent in film quality and productivity.

In order to solve the aforementioned problems, the present inventors have made eager studies on a biaxially stretched polypropylene film having a small thickness, particularly by paying attention to the refractive index, which is one of the indices representing the orientation of the polypropylene resin. As a result of this, the present inventors have found out that the aforementioned problems can be solved by:
a biaxially stretched polypropylene film comprising a polypropylene resin, the biaxially stretched polypropylene film having a thickness of 1.0 to 3.0 um and having a molecular orientation coefficient ΔNx of 0.0130 to 0.0160, as calculated according to the following formula (1):
[Formula 1] 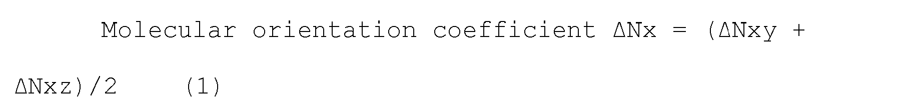 Molecular orientation coefficient ΔNx = (ΔNxy + ΔNxz)/2 (1) on a basis of a birefringence value ΔNxy in a slow axis direction with respect to a fast axis direction and a birefringence value ΔNxz in the slow axis direction with respect to a thickness direction, as measured via optical birefringence measurement, thereby completing the present invention.

The present invention and embodiments thereof are defined in the claims.

The biaxially stretched polypropylene film of the present invention, though having an extremely small thickness of 1.0 to 3.0 um, is excellent in long-term durability at a high temperature and at a high voltage, is excellent also in film quality because of hardly generating poor stretching of the film at the time of production, and is excellent in productivity because of hardly generating fracture of the film at the time of production. The biaxially stretched polypropylene film of the present invention has the properties described above and is suitably used particularly as a biaxially stretched polypropylene film for capacitors.

Further, a capacitor obtained by using the biaxially stretched polypropylene film of the present invention can be reduced in scale and weight and can have a higher capacitance because the biaxially stretched polypropylene film is a thin film. Also, since the biaxially stretched polypropylene film of the present invention is excellent in long-term durability at a high temperature and at a high voltage, a capacitor obtained by using this can be suitably used as a high-capacitance capacitor to which a high voltage is applied at a high temperature.

Hereafter, embodiments of the present invention will be described in detail.

In the present specification, the expressions of "contain" and "comprise" encompass the concepts of "contain", "comprise", "be substantially made of", and "consist only of".

In the present specification, the expression of "capacitor" encompasses the concepts of "capacitor", "capacitor element", and "film capacitor".

The biaxially stretched polypropylene film of the present embodiment is not a microporous film and hence does not have numerous pores.

The biaxially stretched polypropylene film of the present embodiment may be configured from a plurality of layers, that is, two or more layers, but is preferably configured from a single layer.

The biaxially stretched polypropylene film of the present embodiment has achieved solution to the aforementioned problems in the case in which the film has an extremely small (thin) thickness of 1.0 to 3.0 um, so that biaxially stretched polypropylene films having a large thickness such as 7 um, 15 um, or 20 um are not assumed.

### <<1. Biaxially stretched polypropylene film>>

The biaxially stretched polypropylene film of the present embodiment is a biaxially stretched polypropylene film having a thickness of 1.0 to 3.0 um and having a molecular orientation coefficient ΔNx of 0.0130 to 0.0160, as calculated according to the following formula (1): $Molecular orientation coefficient ΔNx = \left(\begin{matrix}ΔNxy + \\ ΔNxz\end{matrix}\right) / 2$ (1) on a basis of a birefringence value ΔNxy in a slow axis direction with respect to a fast axis direction and a birefringence value ΔNxz in the slow axis direction with respect to a thickness direction, as measured via optical birefringence measurement. Hereafter, the biaxially stretched polypropylene film of the present embodiment will be referred to also as "polypropylene film of the present embodiment". The polypropylene film of the present embodiment having the aforementioned characteristics, though having an extremely small thickness of 1.0 to 3.0 um, is (a) excellent in film quality because of hardly generating poor stretching of the film at the time of production, and also (b) excellent in productivity because of hardly generating fracture of the film at the time of production. Moreover, a capacitor including the polypropylene film of the present embodiment having the aforementioned characteristics is (c) excellent in long-term durability at a high temperature and at a high voltage because capacitance decrease after loading with a high voltage for a long period of time at a high temperature is suppressed, though the film has an extremely small thickness of 1.0 to 3.0 um. In other words, the polypropylene film of the present embodiment is excellent in long-term durability at a high temperature and at a high voltage and is also excellent in film quality and productivity. Here, in the present specification, excellence in long-term durability during use at a high temperature and at a high voltage may mean, as one example, suppression of capacitance change rate after the capacitor is continuously loaded with a voltage per unit thickness of direct-current 300 V/um for 1000 hours in a temperature environment of 105°C or higher.

### <1-1. Molecular orientation coefficient ΔNx>

The molecular orientation coefficient ΔNx is calculated according to the following formula (1): 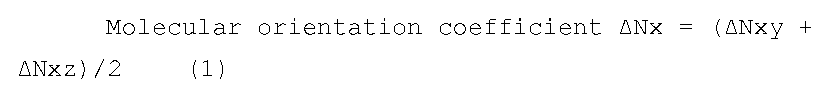 Molecular orientation coefficient ΔNx = (ΔNxy + ΔNxz)/2 (1) on a basis of a birefringence value ΔNxy in a slow axis direction with respect to a fast axis direction and a birefringence value ΔNxz in the slow axis direction with respect to a thickness direction, as measured via optical birefringence measurement. Here, the molecular orientation coefficient "ΔNx" can be simply referred to also as "X".

The birefringence value ΔNxy in the slow axis direction with respect to the fast axis direction in the above formula (1) is a value calculated by the following formula (2): $ΔNxy = Nx - Ny$ (2) [wherein, Nx represents a three-dimensional refractive index in the x-axis direction (slow axis direction), and Ny represents a three-dimensional refractive index in the y-axis direction (fast axis direction)]. More specifically, ΔNxy is calculated in the following manner. Of the x-axis and y-axis which are the main axes in the in-plane direction of the film, the slow axis in the direction giving a higher refractive index is regarded as the x-axis, and the fast axis in the direction giving a lower refractive index is regarded as the y-axis. Here, the refractive index is a parameter representing the molecular orientation within the polypropylene film and shows that, according as the refractive index is higher in a certain direction, the molecules are oriented more in that direction. Generally, according as the stretching ratio with respect to a certain direction is higher, the molecules are oriented more in that direction, giving a higher refractive index. Accordingly, when a non-stretched polypropylene film is biaxially stretched and when, for example, the stretching ratio in the width direction (TD direction) is higher than the stretching ratio in the flow direction (MD direction), the flow direction of the biaxially stretched polypropylene film is the fast axis (y-axis), and the width direction is the slow axis (x-axis). Further, the birefringence value ΔNxy is calculated by subtracting the three-dimensional refractive index in the y-axis direction from the three-dimensional refractive index in the x-axis direction.

In the present specification, the birefringence value ΔNxy is measured specifically by using a retardation measuring device (retardation measuring device RE-100 manufactured by Otsuka Electronics Co., Ltd.). More specifically, with respect to a measurement sample obtained by cutting the film out to a predetermined size (for example, 50 mm × 50 mm), retardation is measured with a wavelength of 550 nm using the aforementioned device. The value (R/d) obtained by dividing the obtained retardation value (R) by the thickness (d) is ΔNxy.

The birefringence value ΔNxz in the slow axis direction with respect to the thickness direction in the above formula (1) is a value calculated by the following formula (3): $ΔNxz = Nx - Nz$ (3) [wherein, Nx represents a three-dimensional refractive index in the x-axis direction (slow axis direction), and Nz represents a three-dimensional refractive index in the z-axis direction (thickness direction)]. More specifically, ΔNxz is calculated in the following manner. The main axes in the in-plane direction of the film are regarded as the x-axis and y-axis. Of these main axes, the slow axis in the direction giving a higher refractive index is regarded as the x-axis. Further, the thickness direction (normal direction relative to the in-plane direction) of the film is regarded as the z-axis. The value obtained by subtracting the three-dimensional refractive index in the z-axis direction from the three-dimensional refractive index in the x-axis direction is the birefringence value ΔNxz.

In the present specification, the birefringence value ΔNxz is measured specifically by the gradient method using a retardation measuring device (retardation measuring device RE-100 manufactured by Otsuka Electronics Co., Ltd.), as described in the non-patent document "Hiroshi AWAYA, Guide for polarization microscope of high-molecular-weight material, pp. 105-120, 2001."

First, as described above, the retardation value (R) measured with respect to the inclination angle ϕ = 0° is divided by the thickness (d) to obtain ΔNxy (R/d).

Next, with the slow axis (x-axis) serving as an inclined axis, in the states in which the measurement sample is inclined at inclination angles ϕ = 10°, 20°, 30°, 40°, and 50°, the retardation value R with respect to each inclination angle ϕ is measured with a wavelength of 550 nm using the aforementioned device. The obtained retardation value R with respect to each inclination angle ϕ is divided by the thickness d subjected to inclination correction, so as to determine R/d for each inclination angle ϕ. With respect to R/d for each inclination angle ϕ, the difference from R/d of ϕ = 0° is determined, and this is further divided by sin2r (r: refraction angle) to obtain the birefringence ΔNzy for each inclination angle ϕ. Here, for the values of refraction angle r at respective inclination angles ϕ with respect to polypropylene, those described on page 109 of the aforementioned non-patent document may be used. An average value of the birefringence values ΔNzy when ϕ = 20°, 30°, 40°, and 50° is regarded as the birefringence value ΔNzy. Next, ΔNxy determined in the above is divided by ΔNzy to calculate the birefringence value ΔNxz.

The molecular orientation coefficient ΔNx can be determined by substituting ΔNxy and ΔNxz measured and calculated as shown above into the following formula (1): 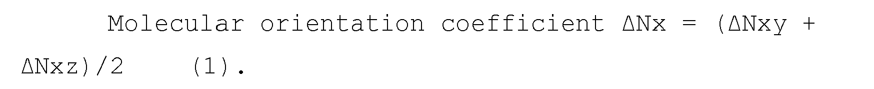 Molecular orientation coefficient ΔNx = (ΔNxy + ΔNxz)/2 (1).

As shown in the above formula (1), the molecular orientation coefficient ΔNx is an average value of ΔNxy related to the orientation property in the in-plane direction of the polypropylene film and ΔNxz related to the orientation property along the slow axis (x-axis) having the highest orientation property and the orientation property in the thickness direction (z-axis). The present inventors have found out that the balance between the orientation property in the x-axis direction and the orientation property in the y-axis direction contributes to film quality and productivity of the biaxially stretched film having a thin layer in which poor stretching or fracture is particularly liable to be generated at the time of stretching, and have studied the birefringence value ΔNxy as an index related to film quality and productivity. Also, the present inventors have found out that, of the x-axis, y-axis, and z-axis, the orientation property in the x-axis direction having the highest orientation property and the orientation property in the z-axis direction being the thickness direction contribute to the long-term durability particularly during use at a high temperature and at a high voltage, and have studied the birefringence value ΔNxz as an index related to long-term durability. Here, in the biaxially stretched polypropylene film, the refractive indices in the x-axis direction, y-axis direction, and z-axis direction are closely related to each other and, for example, when orientation is given in the in-plane direction (x-axis direction and/or y-axis direction) of the polypropylene film, the orientation in the thickness direction (z-axis direction) decreases. In this case, the refractive index in the in-plane direction is high, and the refractive index in the thickness direction is low. Accordingly, the birefringence values ΔNxy and ΔNxz also are closely related to each other. Based on this fact, the present inventors have paid attention to the molecular orientation coefficient ΔNx shown by the above formula (1), which means an average value of the birefringence values ΔNxy and ΔNxz, and have found out that the film quality and productivity of the biaxially stretched film and the long-term durability during use at a high temperature and at a high voltage can be made compatible with each other by adjusting the molecular orientation coefficient ΔNx to be within the aforementioned predetermined range.

In the biaxially stretched polypropylene film of the present embodiment, the molecular orientation coefficient ΔNx calculated by the formula (1) is 0.0130 to 0.0160. When the molecular orientation coefficient ΔNx is smaller than 0.013, poor stretching such as stretching unevenness is liable to be generated in stretching the polypropylene film, so that the quality of the biaxially stretched film may be degraded, or continuous production cannot be carried out due to fracture of the film. This seems to be due to the following reason. It seems that, when the molecular orientation coefficient ΔNx is smaller than 0.013, fracture is liable to be generated in biaxially stretching the polypropylene film, particularly due to the fact that ΔNxy is too small, that is, due to the fact that the molecular orientation in the y-axis direction is too high. When fracture of the film occurs in stretching, continuous production cannot be carried out, and productivity decreases. When a non-stretched polypropylene film is biaxially stretched, for example, under conditions such that the stretching ratio in the width direction (TD direction) is higher than the stretching ratio in the flow direction (MD direction), the flow direction of the biaxially stretched polypropylene film is the fast axis (y-axis), and the width direction is the slow axis (x-axis). In this case, when the molecular orientation in the flow direction is too high, poor stretching may be, in some cases, liable to be generated at the time of stretching in the width direction. Also, there may be cases in which the film is liable to be fractured at the time of stretching in the width direction. Here, a biaxially stretched polypropylene film having a small thickness is liable to generate fracture of the film by stretching during the production, as compared with a polypropylene film having an ordinary thickness. Also, in the biaxially stretched polypropylene film having a small thickness, even when slight stretching unevenness is generated by poor stretching, the thickness unevenness caused by stretching unevenness gives a large influence on the quality of the biaxially stretched film. For this reason, suppression of poor stretching and fracture of the film during the production is particularly important in producing a biaxially stretched polypropylene film having a small thickness.

Also, when the molecular orientation coefficient ΔNx is smaller than 0.013, there may be cases in which the long-term durability of the film at a high temperature decreases. This seems to be due to the following reason. It seems that, when the molecular orientation coefficient ΔNx is smaller than 0.013, the electric conductivity in the thickness direction of the film increases, particularly due to the fact that ΔNxz is too small, that is, due to the fact that the molecular orientation in the z-axis direction is too high. Here, in using a capacitor including the biaxially stretched polypropylene film, voltage is applied to the thickness direction of the polypropylene film. Also, electric current flows along the molecular chain oriented in the polypropylene film. For this reason, it seems that, when the molecular orientation in the thickness direction (z-axis direction) is too high, electric current is liable to flow in the thickness direction, whereby the voltage resistance decreases, and the long-term durability particularly at a high temperature and at a high voltage decreases.

The molecular orientation coefficient ΔNx is 0.0130 or more, more preferably 0.0132 or more, still more preferably 0.0135 or more, and particularly preferably 0.0138 or more, in view of suppressing poor stretching and fracture in producing the biaxially stretched polypropylene film to facilitate improvement in the film quality and productivity and to facilitate improvement in the long-term durability at a high temperature and at a high voltage.

When the molecular orientation coefficient ΔNx is larger than 0.016, it is not possible to obtain a film satisfying the long-term durability at a high temperature and at a high voltage that is demanded particularly in a capacitor or the like for use in automobiles. This seems to be due to the following reason. First, the electric current is blocked by fine crystals within the film. It seems that the fine crystals in the film are arranged parallel to the in-plane direction of the film in each of the stretching steps in the two orthogonal axial directions, which are the fast axis (y-axis) and slow axis (x-axis) directions. This seems to make the electric current less likely to flow in the thickness direction. In the two orthogonal axial directions, the fine crystals seem to be in a state having a smaller degree of freedom in rotation and are bound in the in-plane direction of the film. It seems that, when the molecular orientation coefficient ΔNx is larger than 0.016, the binding property in the fast axis (y-axis) direction of the fine crystals decreases, particularly due to the fact that ΔNxy is too large, that is, due to the fact that the molecular orientation in the fast axis (y-axis) direction is too small. For this reason, it seems that the molecular orientation in the in-plane direction of the film particularly at a high temperature cannot be maintained, and the capability of blocking the electric current in the thickness direction decreases, making it impossible to obtain the long-term durability at a high temperature and at a high voltage.

The molecular orientation coefficient ΔNx is preferably 0.0155 or less, more preferably 0.0150 or less, still more preferably 0.0149 or less, and particularly preferably 0.0148 or less, in view of suppressing poor stretching and fracture in producing the biaxially stretched polypropylene film to facilitate improvement in the film quality and productivity and to facilitate improvement in the long-term durability at a high temperature and at a high voltage.

The birefringence value ΔNxy is not particularly limited as long as the molecular orientation coefficient ΔNx is within the aforementioned range; however, a lower limit value of ΔNxy is preferably 0.009 or more, more preferably 0.01 or more, and still more preferably 0.011 or more, in view of providing a good balance between the orientation property in the x-axis direction and the orientation property in the y-axis direction, facilitating suppression of poor stretching or fracture in producing the biaxially stretched polypropylene film made of a thin layer, and facilitating improvement in the film quality and productivity. Also, from similar viewpoints, an upper limit value of ΔNxy is preferably 0.014 or less, more preferably 0.013 or less, and still more preferably 0.012 or less.

The birefringence value ΔNxz is not particularly limited as long as the molecular orientation coefficient ΔNx is within the aforementioned range. A lower limit value of ΔNxz is preferably 0.015 or more, more preferably 0.016 or more, and still more preferably 0.017 or more, in view of facilitating improvement in the voltage resistance and long-term durability of the polypropylene film so that the polypropylene film can withstand use over a long period of time particularly at a high temperature and at a high voltage. Also, from similar viewpoints, an upper limit value of ΔNxz is preferably 0.023 or less, more preferably 0.022 or less, still more preferably 0.02 or less, and extremely preferably 0.019 or less.

As will be understood from the above formula (1), the molecular orientation coefficient ΔNx can be set to be within the aforementioned predetermined range by adjusting the birefringence values ΔNxy and ΔNxz, more specifically, by adjusting the refractive indices in the x-axis, y-axis, and z-axis directions (Nx, Ny, and Nz), that is, by adjusting the molecular orientation property in the x-axis, y-axis, and z-axis directions.

Since the molecular orientation property is influenced particularly by the stretching conditions, the molecular orientation coefficient ΔNx can be adjusted to be within the aforementioned range by suitably adjusting the stretching temperature and stretching ratio at the time of stretching in the flow direction (hereafter also referred to as "longitudinal stretching temperature" and "longitudinal stretching ratio", respectively), the stretching temperature, stretching ratio, and stretching angle at the time of stretching in the width direction (hereafter also referred to as "lateral stretching temperature", "lateral stretching ratio", and "lateral stretching angle", respectively), the relaxation temperature and relaxation ratio after stretching in the flow direction and the width direction, and the like. Here, an example of preferable stretching conditions in the present embodiment will be described later in the section of "1-5. Production method". Also, in the present specification, the "longitudinal direction" and the "flow direction" have the same meaning, and the "lateral direction" and the "width direction" have the same meaning.

Besides the above, the molecular orientation coefficient ΔNx can be adjusted also by selection of a polypropylene resin (particularly the molecular weight distribution of the polypropylene resin and the like). An example of preferable polypropylene resin in the present embodiment will be described later in the section of "1-2. Resin".

### <1-2. Resin>

The polypropylene film of the present embodiment contains a polypropylene resin as the resin. Preferably, the major component of the polypropylene film of the present embodiment is a polypropylene resin. More preferably, the resin component constituting the film is a polypropylene resin. Here, the aforementioned "major component" means that the resin serving as the major component is contained at 50 mass% or more, preferably 70 mass% or more, more preferably 90 mass% or more, still more preferably 95 mass% or more, and particularly preferably 99 mass% or more, as converted in terms of solid components in the polypropylene film.

The polypropylene resin is not particularly limited as long as a polypropylene film having the thickness and molecular orientation coefficient ΔNx within the aforementioned ranges can be obtained, and those that can be used for forming the film can be widely used. Examples of the polypropylene resin include propylene homopolymers such as isotactic polypropylene and syndiotactic polypropylene; copolymer of propylene and ethylene; long-chain branched polypropylene; and ultrahigh molecular weight polypropylene. Preferably, propylene homopolymers can be mentioned as examples. More preferably, among these, isotactic polypropylene can be mentioned in view of heat resistance. Still more preferably, isotactic polypropylene obtained by homopolymerization of polypropylene in the presence of an olefin polymerization catalyst may be mentioned. The polypropylene resin may be used either alone as one kind or in combination of two or more kinds.

The weight average molecular weight (Mw) of the polypropylene resin is preferably 250,000 or more and 450,000 or less. When such a polypropylene resin is used, a moderate resin flowability is obtained at the time of biaxial stretching, and the thickness of the cast sheet can be easily controlled. It will be advantageously easy to obtain a biaxially stretched polypropylene film that has been made extremely thin and is suitable, for example, for small-scale and high-capacitance type capacitors. Also, unevenness of the thickness of the cast sheet and the biaxially stretched polypropylene film is advantageously unlikely to be generated. The weight average molecular weight (Mw) of the polypropylene resin is more preferably 270,000 or more, still more preferably 290,000 or more, in view of the thickness uniformity, mechanical properties, heat-mechanical properties and the like of the biaxially stretched polypropylene film. The weight average molecular weight (Mw) of the polypropylene resin is more preferably 400,000 or less in view of the flowability of the polypropylene resin and the stretchability in obtaining a biaxially stretched polypropylene film that has been made extremely thin.

The molecular weight distribution (Mw/Mn), which is calculated as a ratio of the weight average molecular weight (Mw) to the number average molecular weight (Mn) of the polypropylene resin, is preferably 7 or more and 12 or less. Also, the molecular weight distribution (Mw/Mn) is preferably 7.1 or more, more preferably 7.5 or more, and still more preferably 8 or more. Further, the molecular weight distribution (Mw/Mn) is preferably 11 or less, more preferably 10 or less. When such a polypropylene resin is used, a moderate resin flowability is obtained at the time of biaxial stretching, and it will be advantageously easy to obtain a biaxially stretched propylene film that has been made extremely thin without having a thickness unevenness. Also, such a polypropylene resin is preferable also in view of voltage resistance of the biaxially stretched polypropylene film.

The weight average molecular weight (Mw), number average molecular weight (Mn), and molecular weight distribution (Mw/Mn) of the polypropylene resin can be measured by using a gel permeation chromatography (GPC) apparatus. More specifically, these can be measured by using, for example, an HLC-8121GPC-HT (trade name) high-temperature GPC measurement apparatus with a built-in differential refractometer (RI) produced by Tosoh Corporation. The values of Mw and Mn are measured, for example, in the following manner. The GPC columns used are three coupled TSKgel GMHHR-H(20)HT columns (produced by Tosoh Corporation), and the measured values of Mw and Mn are obtained by setting the column temperature to 140°C, and letting trichlorobenzene flow as an eluate at a flow rate of 1.0 ml/10 min. A calibration curve of the molecular weight M of polystyrene standard (produced by Tosoh Corporation) is prepared, and the measured values are converted into polystyrene values to thereby obtain Mw and Mn.

Further, the base-10 logarithm of the molecular weight M of standard polystyrene is referred to as "logarithmic molecular weight (Log(M))". The polypropylene resin preferably has a difference (D_{M}), as obtained by subtracting a differential distribution value when the logarithmic molecular weight Log(M) = 6.0 from a differential distribution value when Log(M) = 4.5 on a molecular weight differential distribution curve, of -2% or more and 18% or less, more preferably 0% or more and 18% or less, still more preferably 2% or more and 18% or less, more preferably 2% or more and 17% or less, and still more preferably 3% or more and 16% or less, based on 100% (standard) of the differential distribution value when Log(M) = 6.0. Here, in the present specification, the difference (D_{M}), as obtained by subtracting a differential distribution value when the logarithmic molecular weight Log(M) = 6.0 from a differential distribution value when Log(M) = 4.5 on a molecular weight differential distribution curve, may be abbreviated simply as "difference (D_{M})".

The "logarithmic molecular weight" is a logarithm of the molecular weight (M) (Log(M)), and the "difference (D_{M}) as obtained by subtracting a differential distribution value when the logarithmic molecular weight is 6 from a differential distribution value when the logarithmic molecular weight is 4.5" is a value serving as an index of how much larger the amount of the component having a logarithmic molecular weight Log(M) = 4.5, which is a typical distribution value of the component having a molecular weight of 10,000 to 100,000 on the low molecular weight side (hereafter also referred to as "low molecular weight component"), is than the amount of the component having Log(M) = around 6.0, which is a typical distribution value of the component having a molecular weight of around 1,000,000 on the high molecular weight side (hereafter also referred to as "high molecular weight component"). The state that the value of the difference (D_{M}) is "positive" means that the amount of the low molecular weight component is larger than the amount of the high molecular weight component.

The differential distribution values can be obtained by GPC in the following manner. A time-intensity curve (generally called an "elution curve") obtained by a differential refractometer (RI) of GPC is used. Using a calibration curve obtained from polystyrene standard, the time axis is converted into the logarithm molecular weight (Log(M)) to thereby convert the elution curve into a curve showing the intensity with respect to Log(M). Since the RI detected intensity is proportional to the component concentration, an integral distribution curve with respect to the logarithmic molecular weight Log(M) can be obtained when the total area of the intensity curve is regarded as 100%. A differential distribution curve can be obtained by differentiating the integral distribution curve by Log(M). Thus, the "differential distribution" means the differential distribution of the concentration fraction with respect to the molecular weight. The above difference (D_{M}) can be obtained by reading the differential distribution value at a specific Log(M) from this curve.

The melt flow rate (MFR) of the polypropylene resin at 230°C and with a load of 2.16 kg is not particularly limited; however, the melt flow rate is preferably 7 g/10 min or less, more preferably 6 g/10 min or less, in view of the stretchability of the obtained film and the like. Further, the melt flow rate is preferably 0.3 g/10 min or more, more preferably 0.5 g/10 min or more, in view of enhancing the precision of the thickness of the polypropylene film of the present embodiment. Here, the aforementioned MFR can be measured in accordance with JIS K 7210-1999.

The mesopentad fraction ([mmmm]) of the polypropylene resin is preferably 94% or more, more preferably 95% or more, and still more preferably larger than 96%. Further, the mesopentad fraction of the polypropylene resin is preferably 98.5% or less, more preferably 98.4% or less, and still more preferably 98% or less. The upper limit and lower limit of the mesopentad fraction of the polypropylene resin are preferably 94% or more and 99% or less, more preferably 95% or more and 98.5% or less. When such a polypropylene resin is used, the crystallinity of the resin is moderately improved due to the moderately high stereoregularity, and the initial voltage resistance and the long-term voltage resistance are improved. Furthermore, desired stretchability can be obtained due to moderate solidification (crystallization) rate during molding of the cast sheet.

The mesopentad fraction [mmmm] refers to an index of stereoregularity that can be obtained by high-temperature nuclear magnetic resonance (NMR) spectroscopy. Specifically, the mesopentad fraction can be measured by, for example, a JNM-ECP500 high-temperature Fourier transform nuclear magnetic resonance system (high-temperature FT-NMR; produced by JEOL Ltd.). The observed nucleus is 13C (125 MHz), the measurement temperature is 135°C, and ortho-dichlorobenzene (ODCB: a mixed solvent of ODCB and deuterated ODCB (mixing ratio = 4/1)) can be used as the solvent that dissolves the polypropylene resin. High-temperature NMR measurement can be carried out by, for example, the method described in "Polymer Analysis Handbook, New Edition, Japan Society for Analytical Chemistry, Research Committee of Polymer Analysis, Kinokuniya Company Ltd., 1995, p. 610".

The measurement mode is single-pulse proton broadband decoupling, the pulse width is 9.1 µsec (45° pulse), the pulse interval is 5.5 sec, the number of integrations is 4500, and the shift reference is CH₃(mmmm) = 21.7 ppm.

Pentad fraction, which represents stereoregularity, is calculated as the percentage of the integrated value of the intensity of each signal derived from a combination of pentads (e.g., "mmmm" or "mrrm") arranged in the same direction (meso (m)) and arranged in different directions (racemo (r)). The assignment of each signal derived from "mmmm," "mrrm," or the like can be determined by referring to, for example, "T. Hayashi, et al., Polymer, Vol. 29, p. 138 (1988)."

The polypropylene film of the present embodiment preferably contains a polypropylene resin A in which the difference (D_{M}) is 10% or more and 18% or less. Here, it is possible to adopt a configuration in which the polypropylene resin contained in the polypropylene film of the present embodiment is the aforementioned polypropylene resin A alone.

When the polypropylene film of the present embodiment contains the polypropylene resin A, the content thereof, although not limitative, is preferably 50 mass% or more and 100 mass% or less, more preferably 55 mass% or more and 90 mass% or less, still more preferably 55 mass% or more and 85 mass% or less, further more preferably 60 mass% or more and 85 mass% or less, particularly preferably 60 mass% or more and 80 mass% or less, and extremely preferably 60 mass% or more and 70 mass% or less, based on 100 mass% of the total polypropylene resin contained in the polypropylene film of the present embodiment.

The weight average molecular weight of the polypropylene resin A is preferably 250,000 or more and 450,000 or less, more preferably 250,000 or more and 400,000 or less. When the polypropylene film of the present embodiment contains the polypropylene resin A having the aforementioned weight average molecular weight, resin flowability is moderate, the thickness of the cast sheet is easily controlled, and a thin stretched film can be easily produced. Further, the thickness of the sheet and film is less likely to be uneven, and the sheet can have a moderate stretchability, which is preferable.

The molecular weight distribution (weight average molecular weight / number average molecular weight (Mw/Mn)) of the polypropylene resin A is preferably 5.5 or more and 12 or less. Mw/Mn of the polypropylene resin A is preferably 7.0 or more, more preferably 7.5 or more, still more preferably 8 or more, further more preferably 8.6 or more, and particularly preferably 9 or more. Also, Mw/Mn of the polypropylene resin A is preferably 11.5 or less, more preferably 11 or less, still more preferably 10.5 or less, and particularly preferably 10 or less. Further, with respect to a combination of the upper limit and lower limit of Mw/Mn of the polypropylene resin A, Mw/Mn is more preferably 7.5 or more and 12 or less, still more preferably 7.5 or more and 11 or less, particularly preferably 8.6 or more and 10.5 or less, and extremely preferably 9 or more and 10 or less.

The molecular weight distribution (Z-average molecular weight / number average molecular weight (Mz/Mn)) of the polypropylene resin A is preferably 15 or more and 70 or less, more preferably 20 or more and 60 or less, and still more preferably 25 or more and 50 or less. Here, Mz/Mn can be measured by using a gel permeation chromatography (GPC) apparatus in the same manner as in the measurement of the aforementioned weight average molecular weight (Mw) and the like.

The difference (D_{M}) of the polypropylene resin A is 10% or more and 18% or less, preferably 10.5% or more and 17% or less, and still more preferably 11% or more and 16% or less.

When the amount of components in which the logarithmic molecular weight Log(M) = 4.5, which is used as a typical distribution value of components having a molecular weight of 10,000 to 100,000 (hereinafter also referred to as "low-molecular-weight components"), which is lower than the value of Mw (250,000 to 450,000) that the polypropylene resin A preferably has, is compared with the amount of components in which Log(M) = around 6.0, which is a typical distribution value of components having a molecular weight of around 1,000,000 (hereinafter also referred to as "high-molecular-weight components"), which is higher than the value of Mw that the polypropylene resin A preferably has, it will be understood that the amount of the low-molecular-weight components is larger by a ratio of 10% or more and 18% or less.

That is, even though it is stated that the molecular weight distribution Mw/Mn of the polypropylene resin A is preferably 7 or more and 12 or less, the above statement merely indicates the size of the molecular weight distribution, and the quantitative relationship between the high-molecular-weight components and the low-molecular-weight components therein is unknown. Accordingly, it is preferable that the polypropylene resin A have a broad molecular weight distribution, and contain components having a molecular weight of 10,000 to 100,000 in an amount larger by a ratio of 10% or more and 18% or less than the amount of components having a molecular weight of 1,000,000.

Since the polypropylene resin A has a difference (D_{M}) of 10% or more and 18% or less, the polypropylene resin contains low-molecular-weight components in an amount larger by a ratio of 10% or more and 18% or less than the amount of high-molecular-weight components. In this case, the stretchability is advantageously excellent.

The mesopentad fraction ([mmmm]) of the polypropylene resin A is preferably 94% or more and 99% or less, more preferably 94.5% or more and 98.5% or less, and still more preferably 95% or more and 98% or less. When the mesopentad fraction [mmmm] is within the aforementioned range, the crystallinity of the resin is moderately improved due to the moderately high stereoregularity, and the initial voltage resistance and the long-term voltage resistance tend to be moderately improved. Furthermore, the solidification (crystallization) rate during molding of the cast sheet is moderate, resulting in moderate stretchability.

The percentage of the heptane insoluble components (HI) of the polypropylene resin A is preferably 96.0% or more, more preferably 97.0% or more. Also, the percentage of the heptane insoluble components (HI) of the polypropylene resin A is preferably 99.5% or less, more preferably 98.5% or less, and still more preferably 98.0% or less. Here, a larger amount of the heptane insoluble components indicates a higher stereoregularity of the resin. When the percentage of the heptane insoluble components (HI) is 96.0% or more and 98.5% or less, the crystallinity of the resin is moderately improved due to the moderately high stereoregularity, and the voltage resistance at a high temperature is improved. Furthermore, the solidification (crystallization) rate during molding of the cast sheet is moderate, resulting in moderate stretchability. A method of measuring the heptane insoluble components (HI) is according to the method described in the Examples.

The melt flow rate (MFR) at 230°C of the polypropylene resin A is preferably 1.0 to 15.0 g/10 min, more preferably 2.0 to 10.0 g/10 min, still more preferably 4.0 to 10.0 g/10 min, and particularly preferably 4.3 to 6.0 g/10 min. When the MFR at 230°C of the polypropylene resin A is within the aforementioned range, the fluidity characteristics in a molten state are excellent, so that unstable flowing such as melt fracture is less likely to occur, and moreover, fracture at the time of stretching can be suppressed. This provides an advantage in that, since the film thickness uniformity is good, formation of a thin part where insulation breakage is liable to occur can be suppressed. A method of measuring the melt flow rate is according to the method described in the Examples.

It is also preferable that the polypropylene film of the present embodiment contains a polypropylene resin A' in which the difference (D_{M}) is 8% or more and 18% or less, in place of the aforementioned polypropylene resin A. Here, it is possible to adopt a configuration in which the polypropylene resin contained in the polypropylene film of the present embodiment is the aforementioned polypropylene resin A' alone. The content, weight average molecular weight, molecular weight distributions (Mw/Mn and Mz/Mn), mesopentad fraction, and the like of the polypropylene resin A' are similar to the content, weight average molecular weight, molecular weight distributions (Mw/Mn and Mz/Mn), and mesopentad fraction of the polypropylene resin A. For this reason, each description of the above in the polypropylene resin A' will be omitted. The difference (D_{M}) of the polypropylene resin A' is preferably 9% or more, more preferably 10% or more. Also, the difference (D_{M}) of the polypropylene resin A' is preferably 17% or less, more preferably 16% or less.

It is preferable that the polypropylene film of the present embodiment contain a polypropylene resin B in which the difference (D_{M}) is -1% or more and less than 10%, besides the aforementioned polypropylene resin A. Here, it is possible to adopt a configuration in which the polypropylene resin contained in the polypropylene film of the present embodiment is the aforementioned polypropylene resin B alone.

When the polypropylene film of the present embodiment contains the polypropylene resin B, the content thereof is preferably 10 mass% or more and 100 mass% or less, more preferably 10 mass% or more and 45 mass% or less, still more preferably 15 mass% or more and 45 mass% or less, further more preferably 15 mass% or more and 40 mass% or less, particularly preferably 20 mass% or more and 40 mass% or less, and extremely preferably 30 mass% or more and 40 mass% or less, based on 100 mass% of the polypropylene resin contained in the polypropylene film of the present embodiment.

When the polypropylene film of the present embodiment contains the polypropylene resins A and B, the polypropylene film preferably contains 55 mass% or more to 90 mass% or less of polypropylene resin A and 10 mass% or more to 45 mass% or less of polypropylene resin B, more preferably 55 mass% or more to 85 mass% or less of polypropylene resin A and 15 mass% or more to 45 mass% or less of polypropylene resin B, still more preferably 60 mass% or more to 85 mass% or less of polypropylene resin A and 15 mass% or more to 40 mass% or less of polypropylene resin B, particularly preferably 60 mass% or more to 80 mass% or less of polypropylene resin A and 20 mass% or more to 40 mass% or less of polypropylene resin B, and extremely preferably 60 mass% or more to 70 mass% or less of polypropylene resin A and 30 mass% or more to 40 mass% or less of polypropylene resin B, based on a sum amount (100 mass%) of the polypropylene resins contained in the polypropylene film of the present embodiment as a standard.

Mw of the polypropylene resin B is preferably 300,000 or more and 400,000 or less, more preferably 330,000 or more and 380,000 or less.

Mw/Mn of the polypropylene resin B is preferably 6 or more, more preferably 7 or more, still more preferably 7.1 or more, and particularly preferably 7.5 or more. Further, Mw/Mn of the polypropylene resin B is preferably 9 or less, more preferably 8.7 or less, still more preferably 8.5 or less, and particularly preferably 8.4 or less. Also, with respect to a combination of the upper limit and lower limit of Mw/Mn of the polypropylene resin, Mw/Mn is preferably 6 or more and 9 or less, more preferably 7 or more and 8.5 or less, and still more preferably 7.5 or more and 8.5 or less.

The difference (D_{M}) of the polypropylene resin B is -1% or more and less than 10%, preferably 0.1% or more and 9.5% or less, more preferably 0.3% or more and 9% or less, and still more preferably 0.3% or more and 8% or less.

The molecular weight distribution (Z-average molecular weight / number average molecular weight (Mz/Mn)) of the polypropylene resin B is preferably 20 or more and 70 or less, more preferably 25 or more and 60 or less, and still more preferably 25 or more and 50 or less.

The mesopentad fraction ([mmmm]) of the polypropylene resin B is preferably 94% or more and less than 98%, more preferably 94.5% or more and 97.5% or less, and still more preferably 95% or more and 97% or less.

The percentage of the heptane insoluble components (HI) of the polypropylene resin B is preferably 97.5% or more, more preferably 98% or more, still more preferably more than 98.5%, and particularly preferably 98.6% or more. Also, the percentage of the heptane insoluble components (HI) of the straight-chain polypropylene resin B is preferably 99.5% or less, more preferably 99% or less.

The melt flow rate (MFR) at 230°C of the polypropylene resin B is preferably 0.1 to 6.0 g/10 min, more preferably 0.1 to 5.0 g/10 min, and still more preferably 0.1 to 3.9 g/10 min.

As the polypropylene resin B, it is preferable to use, for example, the following resin B1 and/or resin B2. The resin B1 is a polypropylene resin in which the difference (D_{M}) is 2% or more and less than 10%. The difference (D_{M}) of the resin B1 is preferably 3% or more and 9.5% or less, more preferably 5% or more and 9% or less, and still more preferably 6% or more and 8% or less.

The resin B2 is a polypropylene resin in which the difference (D_{M}) is -1% or more and less than 2%. The difference (D_{M}) of the resin B2 is preferably 0% or more and 1.9% or less, more preferably 0.1% or more and 1.5% or less, and still more preferably 0.3% or more and 1% or less.

The preferable weight average molecular weight, mesopentad fraction, percentage of heptane insoluble components, and melt flow rate of the resin B1 and resin B2 are similar to the preferable weight average molecular weight, mesopentad fraction, percentage of heptane insoluble components, and melt flow rate in the aforementioned resin B, respectively. The molecular weight distribution (Mw/Mn) of the resin B1 is preferably 7 or more and 8.5 or less, more preferably 7.1 or more and less than 8.1, still more preferably 7.1 or more and 8 or less, further more preferably 7.3 or more and less than 8, and particularly preferably 7.5 or more and 7.9 or less. The molecular weight distribution (Mw/Mn) of the resin B2 is preferably 7.5 or more and 9 or less, more preferably 7.7 or more and 8.9 or less, still more preferably 8 or more and 8.7 or less, and particularly preferably 8.1 or more and 8.5 or less.

As the polypropylene resin B, it is possible to use the resin B1 or the resin B2 alone, or to use the resin B1 and the resin B2 in combination.

When the resin B1 is used as the resin B, the lateral stretching temperature in stretching in the width direction is preferably higher than 140°C and lower than 165°C, more preferably 150°C or higher and 164°C or lower, still more preferably 153°C or higher and 160°C or lower, particularly preferably 155°C or higher and lower than 160°C, and extremely preferably 155°C or higher and 159°C or lower, as will be described later. When the resin B2 is used as the resin B, the lateral stretching temperature in stretching in the width direction is preferably 159°C or higher and 180°C or lower, more preferably 160°C or higher and 175°C or lower, still more preferably 160°C or higher and 170°C or lower, particularly preferably 161°C or higher and 167°C or lower, and extremely preferably 162°C or higher and 165°C or lower, as will be described later.

It is also preferable that the polypropylene film of the present embodiment contain a polypropylene resin B' in which the difference (D_{M}) is -20% or more and less than 8% based on 100% (standard) of the differential distribution value when Log(M) = 6.0, in place of the aforementioned polypropylene resin B. Here, it is possible to adopt a configuration in which the polypropylene resin contained in the polypropylene film of the present embodiment is the aforementioned polypropylene resin B' alone. The content, weight average molecular weight, molecular weight distributions (Mw/Mn and Mz/Mn), mesopentad fraction, percentage of heptane insoluble components, melt flow rate, and the like of the polypropylene resin B' are similar to the content, weight average molecular weight, molecular weight distributions (Mw/Mn and Mz/Mn), mesopentad fraction, percentage of heptane insoluble components, and melt flow rate of the polypropylene resin B. For this reason, each description of the above in the polypropylene resin B' will be omitted. The difference (D_{M}) of the polypropylene resin B' is preferably -10% or more, more preferably -5% or more, still more preferably 0% or more, and particularly preferably 0.5% or more. Also, the difference (D_{M}) of the polypropylene resin B' is preferably 7.9% or less, more preferably 7.5% or less.

As the polypropylene resin B', it is preferable to use, for example, the following resin B'1 and/or resin B'2. The resin B'1 is a polypropylene resin in which the difference (D_{M}) is 3.6% or more and less than 8%. The difference (D_{M}) of the resin B1 is preferably 3.6% or more and 7.5% or less. The resin B'2 is a polypropylene resin in which the difference (D_{M}) is -20% or more and less than 3.6%. The difference (D_{M}) of the resin B'2 is preferably -10% or more and 3.5% or less, more preferably 0% or more and 3.5% or less, and still more preferably 0.1% or more and 3.5% or less.

The preferable weight average molecular weight, mesopentad fraction, percentage of heptane insoluble components, and melt flow rate of the resin B'1 and resin B'2 are similar to the preferable weight average molecular weight, mesopentad fraction, percentage of heptane insoluble components, and melt flow rate in the aforementioned resin B, respectively. The preferable molecular weight distribution (Mw/Mn) of the resin B'1 is similar to the preferable molecular weight distribution (Mw/Mn) of the polypropylene resin B1, and the preferable molecular weight distribution (Mw/Mn) of the resin B'2 is similar to the preferable molecular weight distribution (Mw/Mn) of the polypropylene resin B2. For this reason, each description of the above on the polypropylene resins B'1 and B'2 will be omitted.

When the polypropylene film of the present embodiment contains the polypropylene resins A and B, the polypropylene film may contain the polypropylene resin A and the polypropylene resin B1, or may contain the polypropylene resin A and the polypropylene resin B2, or may contain the polypropylene resin A, the polypropylene resin B1, and the polypropylene resin B2. Also, when the polypropylene film of the present embodiment contains the polypropylene resins A' and B', the polypropylene film may contain the polypropylene resin A' and the polypropylene resin B'1, or may contain the polypropylene resin A' and the polypropylene resin B'2, or may contain the polypropylene resin A', the polypropylene resin B'1, and the polypropylene resin B'2.

The polypropylene film of the present embodiment can contain a long-chain branched polypropylene (a branched polypropylene; hereinafter also referred to as "polypropylene resin C") for the purpose of enhancing the surface smoothness and heat resistance. Regarding the polypropylene film of the present embodiment, the aforementioned desired polypropylene film can be suitably obtained even when the polypropylene resin C is not contained.

In the present specification, the polypropylene resin C is not particularly limited, as long as it is a polypropylene generally called "a long-chain branched polypropylene" and has a long-chain branch, and the polypropylene film of the present embodiment can be obtained. Specific examples of the polypropylene resin C include Profax PF-814, PF-611, and PF-633 (all of which are produced by Basell); Daploy HMS-PP (e.g., WB130HMS, WB135HMS, and WB140HMS; all of which are produced by Borealis); and the like.

The polypropylene film of the present embodiment preferably contains the polypropylene resin C in view of facilitating appropriate smoothing of the obtained film surface and being capable of increasing the melting point of the film by several degrees centigrade, thereby increasing the heat resistance. When the polypropylene film of the present embodiment contains the polypropylene resin C, the content thereof is preferably 5 mass% or less, more preferably 0.1 mass% or more and 5 mass% or less, even more preferably 0.5 mass% or more and 4 mass% or less, particularly preferably 1 mass% or more and 3 mass% or less, and extremely preferably 1.5 mass% or more and 2.5 mass% or less, based on the sum amount (100 mass%) of the polypropylene resins contained in the polypropylene film of the present embodiment as a standard.

When the polypropylene film of the present embodiment contains the polypropylene resins A to C or A', B', and C, the polypropylene film preferably contains 55 mass% or more to 90 mass% or less of polypropylene resin A or A', 10 mass% or more to 45 mass% or less of polypropylene resin B or B', and 5 mass% or less of polypropylene resin C; more preferably 55 mass% or more to 89.9 mass% or less of polypropylene resin A or A', 10 mass% or more to 44.9 mass% or less of polypropylene resin B or B', and 0.1 mass% or more to 5 mass% or less of polypropylene resin C; particularly preferably 60 mass% or more to 84.5 mass% or less of polypropylene resin A or A', 15 mass% or more to 39.5 mass% or less of polypropylene resin B or B', and 0.5 mass% or more to 4 mass% or less of polypropylene resin C; and further particularly preferably 60 mass% or more to 79 mass% or less of polypropylene resin A or A', 20 mass% or more to 39 mass% or less of polypropylene resin B or B', and 1 mass% or more to 3 mass% or less of polypropylene resin C, based on the sum amount (100 mass%) of the polypropylene resins contained in the polypropylene film of the present embodiment as a standard.

The polypropylene film of the present embodiment can contain polypropylene resins (hereinafter also referred to as "other polypropylene resins") other than those described above. The "other polypropylene resins" are not particularly limited, as long as they are generally called polypropylene resins, and the polypropylene film of the present embodiment can be obtained. The polypropylene film of the present embodiment can contain such other polypropylene resins in an amount that does not adversely affect the film.

The polypropylene film of the present embodiment preferably contains two types of polypropylene resins (polypropylene resin I and polypropylene resin II) that are different in the molecular weight distribution (Mw/Mn) and/or in the difference (D_{M}). Further, the resins constituting the polypropylene film of the present embodiment are more preferably two types or three or more types that are different from each other in the molecular weight distribution and/or in the difference (D_{M}). In particular, the resins constituting the polypropylene film of the present embodiment are preferably two types that are different from each other in the molecular weight distribution and/or in the difference (D_{M}). The polypropylene resin I may be the polypropylene resin A or A' described above, and the polypropylene resin II may be the polypropylene resin B or B' described above (for example, polypropylene resin B1 and/or polypropylene resin B2, or polypropylene resin B'1 and/or polypropylene resin B'2). Use of such polypropylene resins facilitates adjustment of the molecular orientation coefficient ΔNx to a desired range.

The molecular weight distribution (Mw/Mn) of the polypropylene resin I is preferably 5.5 or more and 12 or less, more preferably 7 or more and 12 or less, still more preferably 7.5 or more and 11 or less, particularly preferably 8.6 or more and 10.5 or less, and extremely preferably 9 or more and 10 or less.

The molecular weight distribution (Mw/Mn) of the polypropylene resin II is preferably 6 or more and 9 or less, more preferably 7 or more and 8.5 or less, and still more preferably 7.5 or more and 8.5 or less.

The difference (D_{M}) of the polypropylene resin I is, for example, 8% or more and 18% or more, preferably 10% or more and 18% or less, more preferably 10.5% or more and 17% or less, and still more preferably 11% or more and 16% or less.

The differential (D_{MI} - D_{MII}) between the difference (D_{M}) of the polypropylene resin I and the difference (D_{M}) of the polypropylene resin II is, for example, 2% or more and 17% or less, preferably 2.5% or more and 14% or less, and more preferably 3% or more and 12% or less. In this case, D_{M} of the polypropylene resin II is, as one example, -1% or more and less than 10%, preferably 0.1% or more and 9.5% or less, and more preferably 0.3% or more and 9% or less. The resin I and resin II giving such a combination may be, for example, the resin A and resin B described above. Also, the difference (D_{M}) of the polypropylene resin II is, as one example, -1% or more and less than 8%, preferably 0.1% or more and 7.9% or less, and more preferably 0.5% or more and 7.5% or less. The resin I and resin II giving such a combination may be, for example, the resin A' and resin B' described above.

In one preferable mode of the present embodiment, the differential (D_{MI} - D_{MII}) between the difference (D_{M}) of the polypropylene resin I and the difference (D_{M}) of the polypropylene resin II is, for example, 2% or more and 10% or less, preferably 2% or more and 6% or less, more preferably 2.5% or more and 5% or less, and still more preferably 3% or more and 4.5% or less. The polypropylene resin II satisfying such a relationship is referred to as polypropylene resin IIα. In this case, the difference (D_{M}) of the polypropylene resin IIα is, as one example, 2% or more and less than 10%, preferably 3% or more and 9.5% or less, and more preferably 5% or more and 9% or less. The resin I and resin IIα giving such a combination may be, for example, the resin A and resin B1, or the resin A' and resin B'1 described above.

In another preferable mode of the present embodiment, the differential (D_{MI} - D_{MII}) between the difference (D_{M}) of the polypropylene resin I and the difference (D_{M}) of the polypropylene resin II is, for example, 5% or more and 17% or less, preferably 6.5% or more and 17% or less, more preferably 8% or more and 14% or less, and particularly preferably 9% or more and 12% or less. The polypropylene resin II satisfying such a relationship is referred to as polypropylene resin IIβ. In this case, the difference (D_{M}) of the polypropylene resin IIβ is, as one example, -1% or more and less than 2%, preferably 0% or more and 1.9% or less, and more preferably 0.1% or more and 1.5% or less. The resin I and resin IIβ giving such a combination may be, for example, the resin A and resin B2, or the resin A' and resin B'2 described above.

When the polypropylene film of the present embodiment contains the polypropylene resin I and the polypropylene resin II, the content of the polypropylene resin I is, for example, 50 mass% or more and 90 mass% or less, preferably 55 mass% or more and 80 mass% or less, and more preferably 60 mass% or more and 70 mass% or less, based on 100 mass% of a sum of the polypropylene resin I and the polypropylene resin II; and the content of the polypropylene resin II is, for example, 10 mass% or more and 50 mass% or less, preferably 20 mass% or more and 45 mass% or less, and more preferably 30 mass% or more and 40 mass% or less, based on 100 mass% of a sum of the polypropylene resin I and the polypropylene resin II.

When the polypropylene film of the present embodiment contains the polypropylene resin I and polypropylene resin II, the content of a sum of the polypropylene resin I and polypropylene resin II is, for example, 70 mass% or more, preferably 80 mass% or more, more preferably 90 mass% or more, and still more preferably 95 mass% or more, based on 100 mass% of the polypropylene resins contained in the polypropylene film of the present embodiment.

The polypropylene film of the present embodiment can further contain resins (hereinafter also referred to as "other resins") other than polypropylene resins. The "other resins" are not particularly limited, as long as they are generally called resins other than polypropylene resins, and the polypropylene film of the present embodiment can be obtained. Examples of other resins include polyolefins other than polypropylenes, such as polyethylene, poly(1-butene), polyisobutene, poly(1-pentene), and poly(1-methylpentene); copolymers of α-olefins, such as ethylene-propylene copolymers, propylenebutene copolymers, and ethylene-butene copolymers; vinyl monomer-diene monomer random copolymers, such as styrenebutadiene random copolymers; vinyl monomer-diene monomervinyl monomer random copolymers, such as styrene-butadienestyrene block copolymers; and the like. The polypropylene film of the present embodiment can contain such other resins in an amount that does not adversely affect the polypropylene film of the present embodiment. In general, the polypropylene film of the present embodiment may contain other resins in an amount of preferably 10 parts by weight or less, and more preferably 5 parts by weight or less, based on 100 parts by weight of the polypropylene resin contained in the polypropylene film of the present embodiment.

### <1-3. Additive>

The polypropylene film of the present embodiment can further contain additives. The "additives" are not particularly limited, as long as they are generally used for polypropylene resins, and the polypropylene film of the present embodiment can be obtained. Examples of additives include necessary stabilizing agents, such as antioxidants, chlorine absorbers, and ultraviolet absorbers; lubricants, plasticizers, flame retardants, antistatic agents, colorants, etc. The polypropylene resin for producing the polypropylene film of the present embodiment can contain such additives in an amount that does not adversely affect the polypropylene film of the present embodiment.

The "antioxidants" are not particularly limited, as long as they are generally called antioxidants and used for polypropylene, and the polypropylene film of the present embodiment can be obtained. Antioxidants are generally used for two purposes. One purpose is to suppress thermal degradation and oxidation degradation in the extruder, and the other purpose is to contribute to suppression of degradation due to long-term use as a capacitor film and improvement of capacitor performance. The antioxidant that suppresses the thermal degradation and oxidation degradation in the extruder is also referred to as the "primary agent," and the antioxidant that contributes to improvement of capacitor performance is also referred to as the "secondary agent."

Two types of antioxidants may be used for these two purposes, or one type of antioxidant may be used for the two purposes.

When two types of antioxidants are used, the polypropylene resin for producing the polypropylene film of the present embodiment may contain a primary agent, such as 2,6-di-tertiary-butyl-para-cresol (generic name: BHT), in an amount of about 1000 ppm to 4000 ppm based on 100 parts by weight of the polypropylene resin as a standard. The antioxidant used for this purpose is mostly consumed in the molding step in the extruder, and hardly remains in the formed film (the remaining amount is generally less than 100 ppm).

A usable secondary agent is a hindered phenol-based antioxidant having a carbonyl group.

The "hindered phenol-based antioxidant having a carbonyl group" is not particularly limited, as long as it is generally called a hindered phenol-based antioxidant having a carbonyl group, and the polypropylene film of the present embodiment can be obtained.

Examples of the hindered phenol-based antioxidant having a carbonyl group include triethylene glycol-bis[3-(3-tertiary-butyl-5-methyl-4-hydroxyphenyl)propionate] (trade name: Irganox 245), 1,6-hexanediol-bis[3-(3,5-di-tertiary-butyl-4-hydroxyphenyl)propionate] (trade name: Irganox 259), pentaerythrityl tetrakis[3-(3,5-di-tertiary-butyl-4-hydroxyphenyl)propionate] (trade name: Irganox 1010), 2,2-thio-diethylenebis[3-(3,5-di-tertiary-butyl-4-hydroxyphenyl)propionate (trade name: Irganox 1035), octadecyl-3-(3,5-di-tertiary-butyl-4-hydroxyphenyl)propionate (trade name: Irganox 1076), N,N'-hexamethylenebis(3,5-di-tertiary-butyl-4-hydroxyhydrocinnamide) (trade name: Irganox 1098), and the like. The most preferable among these is pentaerythrityl tetrakis[3-(3,5-di-tertiary-butyl-4-hydroxyphenyl)propionate], which has a high molecular weight, high compatibility with polypropylene, low volatility, and excellent heat resistance.

The polypropylene resin for producing the polypropylene film of the present embodiment preferably contains a hindered phenol-based antioxidant having a carbonyl group in an amount of 5000 ppm by mass or more and 7000 ppm by mass or less, and more preferably 5500 ppm by mass or more and 7000 ppm by mass or less, based on 100 parts by weight of the polypropylene resin as a standard.

Since a considerable amount of the hindered phenol-based antioxidant having a carbonyl group is also consumed in the extruder, it is preferable that the polypropylene resin for producing the polypropylene film of the present embodiment contain the antioxidant in the aforementioned amount.

When the polypropylene resin for producing the polypropylene film of the present embodiment does not contain a primary agent, a larger amount of hindered phenol-based antioxidant having a carbonyl group can be used. Since the consumption of the hindered phenol-based antioxidant having a carbonyl group in the extruder increases, it is preferable that the polypropylene resin contain the hindered phenol-based antioxidant having a carbonyl group in an amount of 6000 ppm by mass or more and 8000 ppm by mass or less, based on 100 parts by weight of the polypropylene resin as a standard.

The polypropylene film of the present embodiment preferably contains one or more types of hindered phenol-based antioxidants having a carbonyl group (secondary agent) for the purpose of suppressing degradation that proceeds with time during a long period of use. When the polypropylene film of the present embodiment contains the one or more antioxidants, the content thereof in the film is preferably 4000 ppm by mass or more and 6000 ppm by mass or less, and more preferably 4500 ppm by mass or more and 6000 ppm by mass or less, based on 100 parts by weight of the polypropylene resin as a standard. In terms of development of appropriate effects, the content of the one or more antioxidants in the film is preferably 4000 ppm by mass or more and 6000 ppm by mass or less.

A capacitor film containing a hindered phenol-based antioxidant having a carbonyl group, which is molecularly compatible with polypropylene, in an amount preferably within a specific range can more readily enhance the long-term durability and hence is preferable.

The polypropylene resin undergoes considerable thermal degradation (oxidative degradation) and shear degradation during the film-forming step (particularly in the extruder). The degree of progression of degradation, i.e., changes in the molecular weight distribution and stereoregularity, can be suppressed by nitrogen purge of the inside of the extruder (inhibition of oxidation), the shape of the screw in the extruder (shear force), the internal shape of the T-die during casting (shear force), the amount of the antioxidant added (inhibition of oxidation), the winding speed during casting (elongation force), etc.

The "chlorine absorber" is not particularly limited, as long as it is generally called a chlorine absorber and used for polypropylene, and the polypropylene film of the present embodiment can be obtained. Examples of the chlorine absorber include metal soaps, such as calcium stearate.

The "ultraviolet absorber" is not particularly limited, as long as it is generally used for polypropylene. Examples of the ultraviolet absorber include benzotriazole (Tinuvin328 produced by BASF Co., Ltd., etc.), benzophenone (Cysorb UV-531 produced by Cytec Co., Ltd., etc.), and hydroxybenzoate (UV-CHEK-AM-340 produced by Ferro Co., Ltd., etc.).

The "lubricant" is not particularly limited, as long as it is generally used for polypropylene. Examples of the lubricant include primary amides (stearamide, etc.), secondary amides (N-stearylstearamide, etc.), and ethylenebisamides (N,N'- ethylenebisstearamide, etc.).

The "plasticizer" is not particularly limited, as long as it is generally used for polypropylene. Examples of the plasticizer include polypropylene random copolymer, etc.

The "flame retardant" is not particularly limited, as long as it is generally used for polypropylene. Examples of the flame retardant include halogen compounds, aluminum hydroxide, magnesium hydroxide, phosphates, borates, antimony oxide, etc.

The "antistatic agent" is not particularly limited, as long as it is generally used for polypropylene. Examples of the antistatic agent include glycerin monoester (glycerin monostearate, etc.), ethoxylated secondary amines, etc.

The "colorant" is not particularly limited, as long as it is generally used for polypropylene. Examples of the colorant are within a range from cadmium and chromiumcontaining inorganic compounds to azo, quinacridone organic pigments.

### <1-4. Production method>

A method for producing the polypropylene film of the present embodiment, although not limited to the following, may be, for example, a production method including, in this order, the following steps 1 to 4:
(1) step 1 of heating and melting a resin composition containing a polypropylene raw material resin,
(2) step 2 of extruding the heated and melted resin composition,
(3) step 3 of cooling and solidifying the extruded resin composition to obtain a cast sheet, and
(4) step 4 of stretching the cast sheet in a flow direction and in a width direction.

Here, in the step 4 of stretching in the width direction, (a) the lateral stretching temperature is higher than 140°C and 180°C or lower, and (b) the stretching angle is 8.5° to 13.5°.

According to such a production method, it is easy to adjust the molecular orientation coefficient ΔNx to be within a desired range, and it is easy to produce the polypropylene film of the present embodiment that is excellent in long-term durability at a high temperature and at a high voltage though having a small thickness, and is also excellent in film quality and productivity. Hereafter, details of the above production method will be described.

### <1-4-1. Method of producing polypropylene raw material resin>

The polypropylene raw material resin (for example, containing the polypropylene resins A, B, and C, or the polypropylene resins I and II), which can be contained in the polypropylene film of the present embodiment, can be produced by a generally known polymerization method. The method for producing the polypropylene resin is not particularly limited as long as the polypropylene film of the present embodiment can be eventually obtained using the produced polypropylene resin. Examples of such a polymerization method include vapor phase polymerization, block polymerization, and slurry polymerization.

The polymerization may be single-stage (one-step) polymerization using a single polymerization reactor, or multistage polymerization using at least two or more polymerization reactors. Moreover, the polymerization may be carried out by adding hydrogen or a comonomer to the reactor as a molecular weight modifier.

The catalyst used is generally a known Ziegler-Natta catalyst, and is not particularly limited as long as the polypropylene film of the present embodiment can be eventually obtained. Moreover, the catalyst may contain a co-catalyst component and a donor. The molecular weight, molecular weight distribution, stereoregularity, etc., can be controlled by adjusting the catalyst and the polymerization conditions.

The "difference (D_{M}) in the differential distribution values" can be adjusted to a desired value by, for example, adjusting the polymerization conditions to adjust the molecular weight distribution, using a decomposition agent, selectively decomposing high-molecular-weight components, and/or mixing resins having different molecular weights.

When the formation of molecular weight distribution is adjusted by the polymerization conditions, it is preferable to use a polymerization catalyst described later, because it is possible to easily adjust the formation of molecular weight distribution and molecular weight. An example of a method for obtaining a polypropylene resin by a multistage polymerization reaction is described below.

The polymerization reaction is carried out at a high temperature in the presence of a catalyst using a plurality of reactors, including a high-molecular-weight polymerization reactor, and a low-molecular-weight or intermediate-molecular-weight polymerization reactor. The amounts of high-molecular-weight components and low-molecular-weight components of the formed resin can be adjusted regardless of the order of the reactors. First, in a first polymerization step, propylene and a catalyst are supplied to a first polymerization reactor. Together with these components, hydrogen as a molecular weight modifier is mixed in an amount necessary to attain a required polymer molecular weight. In the case of slurry polymerization, for example, the reaction temperature is about 70 to 100°C, and the residence time is about 20 to 100 minutes. The plurality of reactors can be used in series, for example. In that case, the polymerization product of the first step is continuously sent to the next reactor together with additional propylene, catalyst, and molecular weight modifier. Subsequently, second polymerization is carried out to adjust the molecular weight lower or higher than that of the first polymerization step. The yield (production output) of the first and second reactors can be adjusted to control the composition (structure) of high-molecular-weight components and low-molecular-weight components.

The catalyst used is preferably a general Ziegler-Natta catalyst. The catalyst may contain a co-catalyst component and a donor. The molecular weight distribution can be controlled by suitably adjusting the catalyst and the polymerization conditions.

When the formation of molecular weight distribution of the polypropylene raw resin is adjusted by peroxide decomposition, peroxide treatment using a decomposing agent, such as hydrogen peroxide or organic oxide, is preferred.

It is known that when a peroxide is added to a disintegration-type polymer, such as polypropylene, a reaction of extracting hydrogen from the polymer occurs, and that some of the resulting polymer radicals are recombined and undergo a crosslinking reaction, while most of the radicals undergo secondary decomposition (β cleavage) to be divided into two polymers having a lower molecular weight. Accordingly, decomposition of high-molecular-weight components proceeds with a high probability, thereby increasing the amount of low-molecular weight components. Thus, the formation of molecular weight distribution can be adjusted. An example of the method that can obtain a resin containing a suitable amount of low-molecular-weight components by peroxide decomposition is described below.

About 0.001 mass% to 0.5 mass% of organic peroxide, such as 1,3-bis-(tertiary-butylperoxideisopropyl)-benzene, is added to a polymer powder or pellets of a polypropylene resin obtained by the polymerization reaction while taking into consideration the target composition (structure) of high-molecular-weight components and low-molecular-weight components. Subsequently, these are melted and kneaded in a melt-kneader at a temperature of about 180°C to 300°C, so as to adjust the formation of the molecular weight distribution.

When the content of low-molecular-weight components is adjusted by blending (resin mixing), at least two or more kinds of resins having different molecular weights may be dry-mixed or melt-mixed.

In general, it is preferable to use a method of mixing a primary resin with about 1 to 40 mass% of an additional resin having a weight average molecular weight higher or lower than the weight average molecular weight of the primary resin based on a sum amount of the primary resin and the additional resin, because the method facilitates adjustment of the amount of low-molecular-weight components.

In addition, in the case of adjusting the content of low-molecular-weight components by blending, the melt flow rate (MFR) can be used as an indicator of the average molecular weight. In this case, the MFR difference between the primary resin and the additional resin is preferably set to be about 1 to 30 g/10 min, in view of convenience during adjustment.

When the polypropylene film of the present embodiment contains a plurality of polypropylene raw material resins (for example, polypropylene resin A and polypropylene resin B), a method of mixing these raw material resins is not particularly limited, and any of these methods can be used. Examples of the method include a method comprising dryblending a polymer powder or pellets of the raw material resins using a mixer or the like, and a method comprising supplying a polymer powder or pellets of the raw material resins to a kneader, followed by melting and kneading to thereby obtain a blended resin.

The mixer and the kneader are not particularly limited. The kneader used can be any of a single-screw type kneader, a two-screw type kneader, or a multi-screw type kneader having three or more screws. When a kneader having two or more screws is used, the type of kneading may be rotation in the same direction or in different directions.

In the case of blending by melting and kneading, the kneading temperature is not particularly limited, as long as favorable kneading is obtained. The kneading temperature is generally 200°C to 300°C, and preferably 230°C to 270°C. When the kneading temperature is equal to or lower than the above upper limit, it is preferable because degradation of the resin can be easily suppressed. In order to prevent resin degradation during melting and kneading, the kneader may be purged with an inert gas such as nitrogen. The molten kneaded resin can be pelletized into a suitable size using a commonly known pelletizer to thereby obtain mixed polypropylene raw material resin pellets.

The total ash content derived from polymerization catalyst residues and the like contained in the polypropylene raw material resin is preferably as low as possible, in order to improve electrical characteristics of the polypropylene film of the present embodiment. The total ash content is preferably 50 ppm or less, more preferably 40 ppm or less, and particularly preferably 30 ppm or less, based on 100 parts by weight of the polypropylene resin as a standard.

### <1-4-2. Method of producing cast sheet>

A "cast sheet", which is a sheet before being stretched, for producing the biaxially stretched polypropylene film of the present embodiment can be produced, for example, by using the polypropylene raw material resin produced as shown above and by passing through:
(1) step 1 of heating and melting a resin composition containing the polypropylene raw material resin,
(2) step 2 of extruding the heated and melted resin composition, and
(3) step 3 of cooling and solidifying the extruded resin composition to obtain a cast sheet.

Polypropylene resin pellets, dry-mixed polypropylene resin pellets (and/or a polymer powder), mixed polypropylene resin pellets prepared by melt-kneading beforehand, or the like that serve as the resin composition are supplied to an extruder, heated and melted (step 1), passed through a filtration filter, thereafter heated and melted at 170°C to 320°C, preferably 200°C to 300°C, molten-extruded from a T-die (step 2), and cooled and solidified by at least one metal drum maintained preferably at 92°C to 105°C, thereby forming a cast sheet (step 3).

By maintaining the temperature of the group of metal drums to be preferably 80°C to 140°C, more preferably 90°C to 120°C, and still more preferably 92°C to 105°C during molding of the cast sheet, the β-crystal fraction of the obtained cast sheet can be set to be within a preferable range and can affect the desired physical properties of the present embodiment. The β-crystal fraction, as determined by the X-ray method, is preferably about 1% or more and 50% or less, more preferably about 5% or more and 30% or less, and still more preferably about 5% or more and 20% or less. It should be noted that this value is a value when no β-crystal nucleating agent is contained. The above range of β-crystal fraction is preferable because both of the two physical properties, i.e., capacitor properties and element-winding processability, can be readily satisfied.

The β-crystal fraction is obtained by X-ray diffraction intensity measurement. This value can be calculated by the method described in "A. Turner-Jones, et al., Makromol. Chem., Vol. 75, p. 134 (1964)," and is referred to as the K value. More specifically, the proportion of β crystals is expressed by the ratio of the sum of three diffraction peak heights derived from α crystals, and a single diffraction peak height derived from β crystals.

The thickness of the cast sheet is not particularly limited, as long as the polypropylene film of the present embodiment can be obtained. In general, the thickness is preferably 0.05 mm to 2 mm, and more preferably 0.1 mm to 1 mm.

### <1-4-3. Method of producing polypropylene film>

The polypropylene film of the present embodiment can be produced by stretching the cast sheet in the flow direction and in the width direction in the step 4. Stretching is carried out by biaxial stretching that causes orientation along longitudinal and lateral axes. The stretching method may be, for example, a simultaneous or sequential biaxial stretching method, preferably a sequential biaxial stretching method.

In the sequential biaxial stretching method, the cast sheet is, for example, first maintained at a temperature of about 100°C to 160°C (longitudinal stretching temperature), and stretched by a factor of 3 to 4.7 (longitudinal stretching ratio) in the flow direction by passing the sheet between rolls having different speeds, and the sheet is immediately cooled to room temperature. Subsequently, the stretched film is guided to a tenter and stretched by a factor of about 3 to 11 (lateral stretching ratio) in the width direction at a temperature of 150°C or higher (lateral stretching temperature) and at a stretching angle of 8.5° to 13.5° (lateral stretching angle). Then, the film is relaxed, solidified by heat, and wound. The wound film is subjected to an aging treatment at a temperature of about 20°C to 45°C, and cut to a desired product width.

Here, the lateral stretching angle refers to an angle formed by a straight line Lₓ, which connects between one end edge Pₓ in the width direction of the stretched film at the time point of starting the lateral stretching step and one end edge P_{y} (on the same side as Pₓ) in the width direction of the stretched film at the time point of ending the lateral stretching step, and a straight line L_{y} which starts at Pₓ and is parallel to the extrusion direction.

In the above production steps, the longitudinal stretching temperature, longitudinal stretching ratio, lateral stretching angle, lateral stretching temperature, lateral stretching ratio, molecular weight distribution of the polypropylene resin, resin temperature during melting, MFR of the cast film, relaxation ratio in the width direction after the lateral stretching, relaxation temperature, and the like are parameters that affect the desired physical properties (thickness being 1.0 to 3.0 um and molecular orientation coefficient ΔNx being 0.0130 to 0.0160) of the present embodiment. By suitably adjusting these parameters, the polypropylene of the present embodiment can be more easily obtained. Among these parameters, the longitudinal stretching ratio, lateral stretching temperature, and lateral stretching angle are parameters that particularly affect the desired physical properties of the present embodiment. With respect to a part of these, one example of an adjustment range thereof will be shown below. However, in the present embodiment, the above parameters are not limited to be within the following ranges.

### <Longitudinal stretching temperature>

In order that the desired physical properties of the present embodiment are easily provided, the longitudinal stretching temperature is preferably 120 to 150°C, more preferably 125 to 142°C, and still more preferably 128 to 140°C.

### <Longitudinal stretching ratio>

In order that the desired physical properties of the present invention are easily provided, the longitudinal stretching ratio is 3 to 4.7, more preferably 3.5 to 4.7. According as the longitudinal stretching ratio is raised, ΔNx tends to decrease. According as the longitudinal stretching ratio is lowered, ΔNx tends to increase.

### <Lateral stretching angle>

In order that the desired physical properties of the present embodiment are easily provided, the lateral stretching angle is 8.5° to 13.5°, more preferably 9° to 13.5°, still more preferably 10° to 13.5°, particularly preferably 10.5° to 13°, and extremely preferably 10.5° to 12°. According as the lateral stretching angle is raised, ΔNx tends to decrease. According as the lateral stretching angle is lowered, ΔNx tends to increase.

### <Lateral stretching temperature>

In order that the desired physical properties of the present embodiment are easily provided, the lateral stretching temperature is higher than 140°C and 180°C or lower, more preferably 155°C or higher and 165°C or lower, still more preferably 155°C or higher and lower than 160°C, and particularly preferably 155°C or higher and 159°C or lower. Here, in order to set the lateral stretching temperature to be within the aforementioned range, a tenter temperature may be set to be within the aforementioned range. When the polypropylene film of the present embodiment contains the resin B1 or B'1, the lateral stretching temperature is preferably higher than 140°C and lower than 165°C, more preferably 150°C or higher and lower than 160°C, still more preferably 153°C or higher and lower than 160°C, particularly preferably 155°C or higher and 159°C or lower, and extremely preferably 155°C or higher and 158°C or lower. When the polypropylene film of the present embodiment contains the resin B2 or B'2, the lateral stretching temperature is preferably 159°C or higher and 180°C or lower, more preferably 160°C or higher and 175°C or lower, still more preferably 161°C or higher and 170°C or lower, particularly preferably 161°C or higher and 167°C or lower, and extremely preferably 162°C or higher and 165°C or lower. According as the lateral stretching temperature is raised, ΔNx tends to increase. According as the lateral stretching temperature is lowered, ΔNx tends to decrease.

### <Lateral stretching ratio>

In order that the desired physical properties of the present embodiment are easily provided, the lateral stretching ratio is preferably 5 to 11, more preferably 7 to 11, and still more preferably 9 to 11.

According to such a stretching step, the polypropylene film of the present embodiment can be produced. The surface of the polypropylene film of the present embodiment is preferably imparted with suitable surface roughness that results in favorable capacitor properties while improving the winding suitability.

### <1-5. Physical properties and characteristics of film>

The thickness of the polypropylene film of the present embodiment is 1.0 to 3.0 um in view of obtaining a biaxially stretched polypropylene film that is excellent in long-term durability at a high temperature and at a high voltage though having a small thickness, and is also excellent in film quality and productivity. The thickness of the biaxially stretched polypropylene film of the present embodiment is preferably 1.2 µm or more, more preferably 1.5 um or more, still more preferably 1.9 um or more, and particularly preferably 2.0 um or more, in view of mechanical strength, insulation breakdown strength, and the like. The thickness of the biaxially stretched polypropylene film of the present embodiment is preferably 2.9 um or less, more preferably 2.7 um or less, still more preferably 2.5 um or less, and particularly preferably 2.4 um or less, in view of facilitating scale reduction and attaining a higher capacitance of the capacitor. The thickness of the biaxially stretched polypropylene film is measured according to JIS-C2330 using a micrometer (JIS-B7502) . The relationship between the thickness of the polypropylene film and ΔNx may differ in tendency depending on the type of the resin and the physical properties thereof, longitudinal and lateral stretching ratios, longitudinal and lateral stretching temperatures, lateral stretching angle, and the like.

The tensile strength of the biaxially stretched polypropylene film of the present embodiment is preferably 450 MPa or more, more preferably 470 MPa or more, and still more preferably 480 MPa or more, in terms of the sum of the tensile strength in the MD direction (T_{MD}) and the tensile strength in the TD direction (T_{TD}) (that is, T_{MD} + T_{TD}). Here, the tensile strength of the polypropylene film of the present embodiment is a value obtained by a measurement method described in the Examples. Also, the sum (T_{MD} + T_{TD}) of the tensile strength of the polypropylene film of the present embodiment is preferably 700 MPa or less, more preferably 600 MPa or less, still more preferably 540 MPa or less, and particularly preferably 520 MPa or less. When the sum of the tensile strength in the MD direction and the tensile strength in the TD direction of the polypropylene film at 23°C, which is a temperature at the time of measurement (described in JIS-C2151), is within each of the aforementioned preferable ranges, the tensile strength at a high temperature also becomes comparatively large. Accordingly, generation of cracks and the like can be suppressed even when the capacitor is used for a long period of time at a high temperature. As a result, long-term voltage resistance at a high temperature can be suitably improved.

The ratio of the tensile strength in the TD direction to the tensile strength in the MD direction (that is, T_{TD}/T_{MD}) of the tensile strength of the polypropylene film of the present embodiment is preferably 2.00 or less, more preferably 1.90 or less, still more preferably 1.80 or less, and particularly preferably 1.75 or less. Also, T_{TD}/T_{MD} is preferably 1.00 or more, more preferably 1.10 or more, still more preferably 1.50 or more, further more preferably 1.60 or more, and particularly preferably 1.65 or more. When T_{TD}/T_{MD} is within each of the aforementioned preferable ranges, the polypropylene film has a large tensile strength in the width direction while having comparatively balanced tensile strengths in the two orthogonal directions. For this reason, molding is carried out while poor molding caused by non-stretched portions or incomplete stretching is being suppressed in the molding process, whereby the film is further more excellent in continuous productivity as well.

The fracture elongation of the biaxially stretched polypropylene film of the present embodiment is preferably 100% or more, more preferably 130% or more, still more preferably 180% ore more, and particularly preferably 190% or more, in terms of the sum of the fracture elongation in the MD direction (E_{MD}) and the fracture elongation in the TD direction (E_{TD}) (that is, E_{MD} + E_{TD}). Here, the fracture elongation of the polypropylene film of the present embodiment is a value obtained by a measurement method described in the Examples. Also, the sum (E_{MD} + E_{TD}) of the fracture elongation of the polypropylene film of the present embodiment is preferably 300% or less, more preferably 250% or less, still more preferably 220% or less, and particularly preferably 200% or less. When the sum of the fracture elongation in the MD direction and the fracture elongation in the TD direction of the polypropylene film at 23°C, which is a temperature at the time of measurement (described in JIS-K7127), is within each of the aforementioned preferable ranges, the polypropylene film has a suitable fracture elongation in the two orthogonal directions, so that molding is carried out while poor molding caused by non-stretched portions or incomplete stretching is being suppressed in the molding process, whereby the film is further more excellent in continuous productivity as well.

The ratio of the fracture elongation in the TD direction to the fracture elongation in the MD direction (that is, E_{TD}/E_{MD}) of the fracture elongation of the polypropylene film of the present embodiment is preferably 0.95 or less, more preferably 0.7 or less, still more preferably 0.6 or less, further more preferably 0.55 or less, and particularly preferably 0.52 or less. Also, E_{TD}/E_{MD} is preferably 0.2 or more, more preferably 0.35 or more, still more preferably 0.4 or more, further more preferably 0.45 or more, and particularly preferably 0.47 or more. When E_{TD}/E_{MD} is within each of the aforementioned preferable ranges, poor molding at the time of producing the capacitor element is suppressed due to having comparatively balanced fracture elongations in the two orthogonal directions, so that hollow voids between the film layers can be easily maintained. As a result, the long-term voltage resistance at a high temperature can be suitably improved.

The tensile elastic modulus of the biaxially stretched polypropylene film of the present embodiment is preferably 3 GPa or more, more preferably 5 GPa or more, still more preferably 5.5 GPa or more, and particularly preferably 6 GPa or more, in terms of the sum of the tensile elastic modulus in the MD direction (M_{MD}) and the tensile elastic modulus in the TD direction (M_{TD}) (that is, M_{MD} + M_{TD}). Here, the tensile elastic modulus of the polypropylene film of the present embodiment is a value obtained by a measurement method described in the Examples. Also, the sum (M_{MD} + M_{TD}) of the tensile elastic modulus of the polypropylene film of the present embodiment is preferably 10 GPa or less, more preferably 9 GPa or less, still more preferably 8 GPa or less, and particularly preferably 7.5 GPa or less. When the sum of the tensile elastic modulus in the MD direction and the tensile elastic modulus in the TD direction of the polypropylene film at 23°C, which is a temperature at the time of measurement (described in JIS-K7127), is within each of the aforementioned preferable ranges, the tensile elastic modulus at a high temperature also becomes comparatively large. Accordingly, generation of cracks and the like can be suppressed even when the capacitor is used for a long period of time at a high temperature. As a result, long-term voltage resistance at a high temperature can be suitably improved.

The ratio of the tensile elastic modulus in the TD direction to the tensile elastic modulus in the MD direction (that is, M_{TD}/M_{MD}) of the tensile elastic modulus of the polypropylene film of the present embodiment is preferably 1.8 or less, more preferably 1.7 or less, still more preferably 1.6 or less, and particularly preferably 1.55 or less. Also, M_{TD}/M_{MD} is preferably 0.85 or more, more preferably 1.0 or more, still more preferably 1.3 or more, and particularly preferably 1.4 or more. When M_{TD}/M_{MD} is within each of the aforementioned preferable ranges, the polypropylene film has a large tensile elastic modulus in the width direction while having comparatively balanced tensile elastic moduli in the two orthogonal directions. For this reason, molding is carried out while poor molding caused by non-stretched portions or incomplete stretching is being suppressed in the molding process, whereby the film is further more excellent in continuous productivity as well.

The surface of the polypropylene film of the present embodiment is preferably finely roughened in such a manner that at least one side of the film has a surface roughness such that the center line average roughness (Ra) is 0.03 µm or more and 0.08 µm or less, and the maximum height (Rz, or Rmax as formerly defined in JIS) is 0.6 µm or more and 1.1 µm or less. When Ra and Rmax are within the above preferable range, the surface can be a finely roughened surface. In capacitor processing, winding wrinkles are less likely to be formed in element-winding processing, and the film can be preferably wound. Further, since uniform contact can be formed between the films, the voltage resistance and the long-term voltage resistance can also be improved.

In the present specification, "Ra" and "Rmax" (Rmax (as formerly defined in JIS)) refer to values measured by a commonly and widely used stylus-type surface roughness tester (e.g., a stylus-type surface roughness tester using a diamond stylus or the like) according to the method defined, for example, in JIS-B0601: 2001. More specifically, "Ra" and "Rmax" can be determined by, for example, using a Surfcom 1400D-3DF-12 three-dimensional surface roughness meter (produced by Tokyo Seimitsu Co., Ltd.) according to the method defined in JIS-B 0601: 2001.

Various known surface-roughening methods, such as embossing and etching, can be used to impart fine irregularities to the film surface. Preferred among these is a surface-roughening method using β crystals, which does not require mixing of impurities. The proportion of β crystals can be generally controlled by changing the cast temperature and cast speed. Moreover, the melting/transformation ratio of β crystals can be controlled by the roll temperature in the longitudinal stretching step. The finely roughened surface properties can be obtained by selecting the optimum production conditions for these two parameters, i.e., β-crystal formation and melting/transformation thereof.

The polypropylene film of the present embodiment has a high initial voltage resistance and has an excellent long-term voltage resistance. Furthermore, since the film can be made extremely thin, a high capacitance can be easily exhibited. Accordingly, the film can be used extremely suitably in small-scale and high-capacitance capacitors of 5 µF or more, preferably 10 µF or more, and more preferably 20 µF or more.

In the polypropylene film of the present embodiment, corona discharge treatment may be carried out online or offline after completion of the stretching and thermal solidification step, for the purpose of enhancing adhesive properties in a subsequent step, such as a metal deposition processing step. Corona discharge treatment can be performed by a known method. The treatment is preferably performed in an atmospheric gas, such as air, carbon dioxide gas, nitrogen gas, or a mixed gas thereof.

### <<2. Metallized film>>

The present embodiment in one mode thereof provides a metallized film having a metal film on one surface or on both surfaces of the polypropylene film of the present embodiment. Hereafter, the metallized film of the present embodiment will be described in detail. A capacitor obtained by winding the metallized film of the present embodiment is excellent in long-term durability at a high temperature and at a high voltage.

The polypropylene film of the present embodiment can be provided with an electrode on one surface or on both surfaces, in order to process the film as a capacitor. Such an electrode is not particularly limited, as long as the capacitor targeted by the present invention can be obtained. Any electrode generally used to produce a capacitor can be used. Examples of the electrode include metal foil, paper having at least one metallized surface, plastic films, and the like.

Since capacitors are required to have a smaller size and a lighter weight, it is preferable that one side or both sides of the film of the present invention is directly metallized to form an electrode or electrodes. Examples of usable metals include single metals, such as zinc, lead, silver, chromium, aluminum, copper, and nickel; mixtures of several kinds of these metals; alloys thereof; and the like. In consideration of the environment, economical efficiency, capacitor performance, etc., zinc and aluminum are preferable.

Examples of the method for directly metallizing the surface of the polypropylene film of the present embodiment include vacuum deposition and sputtering. The method is not particularly limited, as long as the capacitor targeted by the present invention can be obtained. Vacuum deposition is preferable, in terms of productivity, economical efficiency, etc. General examples of vacuum deposition include a crucible method, a wire method, and the like; however, the method is not particularly limited, as long as the capacitor targeted by the present invention can be obtained. An optimal method can be suitably selected.

The film resistance of the metal vapor deposition film is preferably about 1 to 100 Ω/□ in view of the electrical properties of the capacitor. A rather high film resistance within this range is desirable in view of the self-healing (self-correction) properties, and the film resistance is more preferably 5 Ω/□ or more, still more preferably 10 Ω/□ or more. Also, the film resistance is more preferably 50 Ω/□ or less, still more preferably 30 Ω/□ or less, in view of the safety as a capacitor. The film resistance of the metal vapor deposition film can be measured, for example, during the metal vapor deposition by a four-terminal method known to those skilled in the art. The film resistance of the metal vapor deposition film can be adjusted, for example, by adjusting the output of the vaporization source to adjust the vaporization amount.

In forming a metal vapor deposition film on one surface of the film, an insulation margin is formed by not vapor-depositing on a certain width from one end of the film so that a capacitor may be formed when the film is wound. Further, it is preferable to form a heavy edge structure at an end that is opposite to the insulation margin so as to make firm the bonding between the metallized polypropylene film and a metallicon electrode, and the film resistance of the heavy edge is typically about 1 to 8 Ω/□, preferably about 1 to 5 Ω/□. The thickness of the metal film is not particularly limited and is preferably, for example, 1 to 200 nm.

The margin pattern of the formed metal vapor deposition film is not particularly limited. However, in view of improving the capacitor properties such as storage stability, it is preferable to form a pattern containing a so-called special margin such as a fishnet pattern, a T-margin pattern, or the like. When a metal vapor deposition film is formed with a pattern containing a special margin on one surface of the polypropylene film of the present embodiment, storage stability of the obtained capacitor is improved, and this is effective also in terms of preventing breakage, short-circuiting, and the like of the capacitor, so that it is preferable.

The method for forming a margin can be a commonly known method, such as a tape method of performing masking with a tape at the time of vapor deposition, an oil method of performing masking by application of an oil, or the like, which can be used without any restrictions.

The metallized film of the present embodiment can be processed into a capacitor of the present embodiment described later by passing through a winding process of winding the film along a longitudinal direction of the film. In other words, a pair of two sheets of the metallized film of the present embodiment are superposed onto each other and wound so that the metal vapor deposition film and the polypropylene film are alternately stacked. Thereafter, a pair of metallicon electrodes are formed by metal thermal spraying on two end surfaces, so as to produce a film capacitor, whereby a capacitor is obtained.

### <<3. Capacitor>>

The present embodiment in one mode thereof provides a capacitor including the metallized film of the present embodiment. Hereafter, the capacitor of the present embodiment will be described in detail.

In the step of producing a capacitor, a process of winding the film is carried out. For example, a pair of two sheets of the metallized film of the present embodiment are superposed onto each other and wound so that the metal film of the present embodiment and the polypropylene film of the present embodiment are alternately stacked and further that an insulation margin part is on the opposite side. During this process, it is preferable that a pair of two sheets of the metallized film of the present embodiment are stacked by shifting the film for 1 to 2 mm. The winding machine used is not particularly limited and, for example, an automatic winding machine 3KAW-N2 type produced by Kaido Manufacturing Co., Ltd. or the like can be used.

In the case of producing a flat-type capacitor, pressing is typically performed on the obtained wound article after winding. Pressing promotes winding fastening of the capacitor and shaping of the element. In view of controlling and stabilizing the interlayer gap, the imparted pressure is 2 to 20 kg/cm², though the optimal value thereof changes depending on the thickness and the like of the polypropylene film of the present embodiment.

Subsequently, a metal is thermally sprayed onto two end surfaces of the wound article to provide a metallicon electrode, whereby a capacitor is produced.

A predetermined heat treatment is further carried out on the capacitor. That is, in the present embodiment, the process includes a step of performing a heat treatment on the capacitor in vacuum at a temperature of 80 to 125°C for one hour or more (hereafter, this step may be referred to as "thermal aging").

In the aforementioned step of performing a heat treatment on the capacitor, the temperature of heat treatment is typically 80°C or more, preferably 90°C or more. On the other hand, the temperature of heat treatment is typically 130°C or less, preferably 125°C or less. The effect of thermal aging can be obtained by performing the heat treatment at the temperature described above. Specifically, the hollow voids between the films constituting the capacitor based on the metallized film of the present embodiment decrease, and corona discharge is suppressed. Moreover, the internal structure of the metallized film of the present embodiment changes to promote crystallization. As a result, it is considered that the voltage resistance is improved. When the temperature of heat treatment is lower than a predetermined temperature, the aforementioned effect produced by thermal aging cannot be sufficiently obtained. On the other hand, when the temperature of heat treatment is higher than a predetermined temperature, thermal decomposition, oxidation degradation, and the like may be generated in the polypropylene film.

The method of performing heat treatment on the capacitor may be suitably selected from among known methods including, for example, a method of using a thermostatic tank in a vacuum atmosphere, a method of using highfrequency induction heating, and the like. Specifically, the method of using a thermostatic tank is preferably adopted.

The period of time for performing heat treatment is preferably one hour or more in view of obtaining mechanical and thermal stability, and is more preferably 10 hours or more. However, in view of preventing poor molding such as heat wrinkles and tracing, the period of time for performing heat treatment is more preferably 20 hours or less.

A leading wire is typically welded on the metallicon electrode of the capacitor subjected to thermal aging. Also, in order to impart weather resistance and particularly to prevent humidity degradation, it is preferable to enclose the capacitor into a case and perform potting with an epoxy resin.

The capacitor of the present embodiment is a small-scale and high-capacitance type capacitor based on the metallized film of the present embodiment and has a high voltage resistance at a high temperature and a long-term durability at a high temperature and at a high voltage.

### EXAMPLES

Next, the present invention will be described further more specifically by way of Examples; however, these examples are provided for explaining the present invention. The terms "parts" and "%" in the examples indicate "parts by mass" and "% by mass," respectively, unless specifically indicated otherwise.

### <Method of measuring and method of calculating each physical property value>

### [Weight average molecular weight (Mw), molecular weight distribution (Mn/Mw), and difference (D_{M})]

The weight average molecular weight (Mw), number average molecular weight (Mn), and differential distribution values on the differential distribution curve of the polypropylene resin were measured under the following conditions using GPC (gel permeation chromatography).
Measurement device: HLC-8121GPC/HT high-temperature GPC apparatus with a built-in differential refractometer (RI) produced by Tosoh Corporation
Column: three coupled TSKgel GMHHr-H(20)HT columns produced by Tosoh Corporation
Column temperature: 145°C
Eluate: trichlorobenzene
Flow rate: 1.0 ml/min

A calibration curve was prepared using polystyrene standard produced by Tosoh Corporation, and the measured molecular weight values were converted into polypropylene values, so as to obtain the weight average molecular weight (Mw) and number average molecular weight (Mn). The molecular weight distribution (Mw/Mn) was calculated by using the obtained values of Mw and Mn.

The differential distribution values were obtained in the following manner. First, a time curve (elution curve) of intensity distribution detected by an RI detector was converted into a distribution curve with respect to the molecular weight M (Log(M)) of the above polystyrene standard using the calibration curve produced using the polystyrene standard. Next, after an integral distribution curve with respect to Log(M) when the total area of the distribution curve was regarded as 100% was obtained, the integral distribution curve was differentiated by Log(M) to thereby obtain a differential distribution curve with respect to Log(M). Differential distribution values when Log(M) = 4.5 and when Log(M) = 6.0 were read from this differential distribution curve. The series of operations until the differential distribution curve was obtained was carried out using analysis software provided in the GPC measurement apparatus. The difference (D_{M}) was calculated by subtracting the differential distribution value when Log(M) = 6.0 from the differential distribution value when Log(M) = 4.5 obtained in the above-described manner.

### <Mesopentad fraction>

The mesopentad fraction was measured by dissolving a resin in a solvent, using a high-temperature Fourier transform nuclear magnetic resonance apparatus (high-temperature FT-NMR) under the following conditions. High-temperature nuclear magnetic resonance (NMR) apparatus: high-temperature Fourier transform nuclear magnetic resonance apparatus (high-temperature FT-NMR), JNM-ECP500, produced by JEOL Ltd.
Observed nucleus: 13C (125 MHz)
Measurement temperature: 135°C
Solvent: Ortho-dichlorobenzene (ODCB; a mixed solvent of ODCB and deuterated ODCB (4/1))
Measurement mode: Single-pulse proton broadband decoupling
Pulse width: 9.1 µsec (45° pulse)
Pulse interval: 5.5 sec
Number of integrations: 4500
Shift reference: CH₃(mmmm) = 21.7 ppm

The mesopentad fraction representing the stereoregularity degree was calculated as a percentage (%) from the integrated value of the intensity of each signal derived from a combination of 5 pentads (pentads) of pentads "meso (m)" arranged in the same direction and pentads "racemo (r)" arranged in different directions (mmmm, mrrm, and the like). Regarding the assignment of each signal derived from mmmm, mrrm, or the like, a reference was made to, for example, the description of spectra in "T. Hayashi, et al., Polymer, Vol. 29, p. 138 (1988)" and the like.

### <Measurement of percentage of heptane insoluble components (HI)>

Each resin was press-molded into a size of 10 mm × 35 mm × 0.3 mm to prepare a measurement sample of about 3 g. Next, about 150 mL of heptane was added, and Soxhlet extraction was carried out for 8 hours. The percentage of heptane insoluble components was calculated based on the sample mass before and after the extraction.

### <Measurement of melt flow rate (MFR)>

With respect to each resin, the melt flow rate (MFR) in a mode of raw material resin pellets was measured in accordance with the conditions M of JIS K 7210 using a melt indexer of Toyo Seiki Co., Ltd. Specifically, first, the sample weighed to 4 g was inserted into a cylinder that had been set to have a test temperature of 230°C and preheated for 3.5 minutes under a load of 2.16 kg. Thereafter, the weight of the sample extruded from the bottom hole in 30 seconds was measured, so as to determine the MFR (g/10 min). The above measurement was repeated for three times, and an average value thereof was calculated as the measurement value of the MFR.

### [Thickness of biaxially stretched polypropylene film]

The thickness was measured using a micrometer (JIS-B7502) according to JIS-C2330.

### [Molecular orientation coefficient ΔNx]

The birefringence values ΔNxy and ΔNzy of the biaxially stretched polypropylene film were measured by the gradient method according to the non-patent document "Hiroshi AWAYA, Guide for polarization microscope of high-molecular-weight material, pp. 105-120, 2001". Measurement instrument: RE-100 retardation measuring device produced by Otsuka Electronics Co., Ltd. Light source: laser light emitting diode (LED) Bandpass filter: 550 nm (measurement wavelength) Measurement method: After the biaxially stretched films obtained in the later-mentioned Examples and Comparative Examples were taken up, the resultant was left to stand for 24 hours in an atmosphere of about 20 to 45°C, so as to perform an aging treatment. The biaxially stretched polypropylene film subjected to the aging treatment was cut out to a size of 50 mm × 50 mm to obtain a measurement sample. The angular dependence of the retardation value was measured in a room temperature environment of 0 to 30°C by the following gradient method. First, the main axes in the in-plane direction of the film were regarded as the x-axis and the y-axis, and the thickness direction (normal direction relative to the in-plane direction) of the film was regarded as the z-axis. Of the in-plane direction axes, the slow axis having a higher refractive index was regarded as the x-axis, and each retardation value when the x-axis, which served as an inclined axis, was inclined 10° by 10° within the range of 0° to 50° relative to the z-axis was determined. Here, in the sequential stretching method, for example, when the stretching ratio in the TD direction (width direction) is higher than the stretching ratio in the MD direction (flow direction), the TD direction serves as the slow axis (x-axis), and the MD direction serves as the y-axis.

Specifically, first, the retardation value (R) measured with respect to the inclination angle ϕ = 0° was divided by the thickness (d) to determine R/d to obtain ΔNxy.

Next, the retardation value R measured with respect to each inclination angle of ϕ = 10°, 20°, 30°, 40°, and 50° was divided by the thickness d subjected to inclination correction, so as to determine R/d for each inclination angle ϕ. With respect to R/d for each of ϕ = 10°, 20°, 30°, 40°, and 50°, the difference from R/d of ϕ = 0° was determined, and this was further divided by sin2r (r: refraction angle) to obtain the birefringence value ΔNzy for each inclination angle ϕ. An average value of the birefringence values ΔNzy when ϕ = 20°, 30°, 40°, and 50° was regarded as the birefringence value ΔNzy. Next, ΔNxy determined in the above was divided by ΔNzy to calculate the birefringence value ΔNxz.

More specifically, the light incident into the measurement sample through a polarizer and a 1/4 wavelength plate was received by a light-receiving module made of a CCD camera to which an array-shaped polarizer having 16 angles had been attached. By simultaneously measuring the received light intensity at a plurality of polarization angles (azimuthal angles), the polarization (ellipticity of transmitted polarized light) state by the sample was measured, so as to calculate the retardation value. The measurement and analysis were carried out using an analyzing computer by the software REseries originally attached to the apparatus.

Finally, the molecular orientation coefficient ΔNx was determined by substituting the birefringence values ΔNxy and ΔNxz into the formula (1): 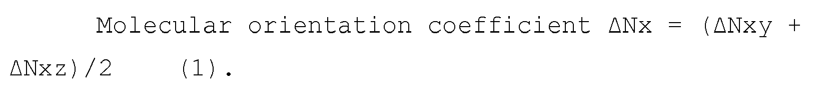 Molecular orientation coefficient ΔNx = (ΔNxy + ΔNxz)/2 (1).

Here, for the values of refraction angle r at respective inclination angles ϕ with respect to polypropylene, those described on page 109 of the aforementioned non-patent document were used.

### [Tensile strength]

The tensile strength of the polypropylene film was measured in accordance with JIS-C2151. Here, the measurement directions were set to be the MD direction (flow direction) and the TD direction (width direction). The temperature at the time of measurement was set to be 23°C.

### [Fracture point elongation, tensile elastic modulus]

The fracture point elongation was measured in accordance with JIS K-7127(1999). Specifically, a tensile test was carried out using a tensile compression testing machine (manufactured by Minebea Co., Ltd.) under the test conditions (measurement temperature of 23°C, test piece length of 140 mm, test length of 100 mm, test piece width of 15 mm, and tensile speed of 100 mm/min). Subsequently, the fracture point elongation (%) and the tensile elastic modulus (GPa) were determined by automatic analysis using a data processing software provided in the testing machine.

### <Measurement of surface roughness>

The center line average roughness (Ra) and Rmax (defined in old JIS) of the biaxially stretched polypropylene film were measured by the contact method using a three-dimensional surface roughness meter SURFCOM 1400D-3DF-12 type manufactured by Tokyo Seimitsu Co., Ltd. in accordance with the method defined in JIS-B0601. The measurement was carried out for three times, and an average value was determined. Ra and Rmax were measured by using the contact method; however, the reliability of the values was confirmed by non-contact method values in accordance with the needs.

### [Continuous productivity]

Production of the film was started using a biaxial stretching apparatus that had been set to have a predetermined thickness, and the period of time in which continuous film forming can be made from the time point at which the obtained film thickness reached the target thickness ± 2% until the film underwent fracture or the like (hereafter, this period of time is also referred to as "continuous film forming time") was measured. Here, the time point at which the thickness reached the target thickness ± 2% was confirmed by cutting out the film and measuring the film thickness in accordance with JIS-C2330 using a micrometer (JIS-B7502). The continuous productivity was evaluated in accordance with the following evaluation standard based on the obtained continuous film forming time.

### (Evaluation standard for continuous productivity)

A: Film formation could be carried out without stretching fracture even when the time exceeded 8 hours.
B: Film formation could be carried out without stretching fracture during the period exceeding one hour and less than 8 hours.
C: The film underwent stretching fracture within one hour, and film formation for a period exceeding one hour was impossible.

### [Poor stretching occupancy]

The length in the width direction of the part where poor stretching (stretching unevenness, non-stretching, and the like) had been generated in the wound film was measured, and the ratio of the length in the width direction of the part where poor stretching had been generated relative to the width length was calculated as the poor stretching occupancy. The obtained poor stretching occupancy was evaluated in accordance with the following evaluation standard.

### (Evaluation standard for poor stretching occupancy)

A: less than 2%
B: 2% or more and less than 7%
C: 7% or more

### <Rate of capacitance change ΔC>

A capacitor for measuring the capacitance was produced in the following manner. A T-margin vapor deposition pattern was applied by performing aluminum vapor deposition at a vapor deposition resistance of 15 Ω/□ on each of the biaxially stretched polypropylene films obtained in the Examples and Comparative Examples described later, so as to obtain a metallized film. After the film was slit to 60 mm width, two sheets of metallized films were superposed and wound for 1076 turns at a winding tension of 250 g with use of an automatic winding machine 3KAW-N2 type produced by Kaido Manufacturing Co., Ltd. The element subjected to element winding was subjected to heat treatment for 15 hours at 120°C while being pressed, followed by thermal spraying with zinc metal on the element end surface to obtain a flat-type capacitor. A leading wire was bonded with solder to the end surface of the flat-type capacitor, and thereafter the capacitor was sealed with an epoxy resin.

The initial capacitance (C₀) of the obtained capacitor before the test was evaluated using LCR HiTESTER 3522-50 produced by Hioki E.E. Corporation. Next, the capacitor was continuously loaded with a voltage per unit thickness of direct-current 300 V/um for 1000 hours in a high-temperature tank of 105°C. The capacitance of the element after 1000 hours had passed (C₁₀₀₀) was measured with an LCR HiTESTER, and rate of capacitance change (ΔC) before and after the loading with voltage was calculated. Here, the relevant rate of capacitance change is calculated by the following formula. [Formula 10] $Rate of capacitance change \left(ΔC\right) = \left({C}_{1000}-{C}_{0}\right) / {C}_{0} \times 100 \left(%\right)$

The rate of capacitance change after 1000 hours had passed was evaluated by an average value of two capacitors. The rate of capacitance change after 1000 hours have passed is preferably within a range of 0 to -5%. Here, the initial capacitance of the capacitor produced by using the polypropylene film of Example 1 described later was 75 µF. Also, the initial capacitances of the capacitors produced by using the polypropylene films of Examples 2 to 10 were of the same degree as that of Example 1.

### <Production Example 1: production of cast sheet 1>

A polypropylene resin A (Mw = 320,000, Mw/Mn = 9.3, D_{M} = 11.2, mesopentad fraction [mmmm] = 95%, HI = 97.3%, MFR = 4.9 g/10 min, produced by Prime Polymer Co., Ltd.) and a polypropylene resin B1 (Mw = 350,000, Mw/Mn = 7.7, D_{M} = 7.2, mesopentad fraction [mmmm] = 96.5%, HI = 98.6%, MFR = 3.8 g/10 min, produced by Korean Petrochemical Industry Corporation) were supplied at a ratio of 65 : 35 to an extruder and melted at a resin temperature of 250°C. Thereafter, the resultant was extruded with use of a T-die, wound around a metal drum having a surface temperature maintained at 95°C, and solidified to produce a cast sheet 1.

### <Production Example 2: production of cast sheet 2>

A cast sheet 2 was produced in the same manner as in Production Example 1 except that a polypropylene resin B2 (Mw = 380,000, Mw/Mn = 8.3, D_{M} = 0.6, mesopentad fraction [mmmm] = 96.7%, HI = 98.8%, MFR = 2.3 g/10 min, produced by Korean Petrochemical Industry Corporation) was used instead of the polypropylene resin B1.

### <Example 1>

The non-stretched cast sheet 1 obtained in the Production Example 1 was maintained at a temperature of 140°C and stretched by a factor of 4.5 in the flow direction by passing the sheet between rolls having different speeds, and the sheet was immediately cooled to room temperature. Subsequently, the stretched film obtained by stretching the cast sheet 1 in the flow direction was guided to a tenter and stretched by a factor of 10 in the width direction at a stretching angle of 11° and at a lateral stretching temperature of 158°C, followed by relaxation and solidification by heat to take up a biaxially stretched polypropylene film having a thickness of 2.3 um.

### <Example 2>

A biaxially stretched polypropylene film was obtained in the same manner as in Example 1 except that the thickness of the biaxially stretched polypropylene film was set to be 2.4 um.

### <Example 3>

A biaxially stretched polypropylene film was obtained in the same manner as in Example 1 except that the thickness of the biaxially stretched polypropylene film was set to be 2.5 um.

### <Example 4>

A biaxially stretched polypropylene film was obtained in the same manner as in Example 1 except that the thickness of the biaxially stretched polypropylene film was set to be 2.8 um.

### <Example 5>

A biaxially stretched polypropylene film was obtained in the same manner as in Example 1 except that the lateral stretching temperature in stretching in the width direction was set to be 156°C and that the thickness of the biaxially stretched polypropylene film was set to be 2.0 µm.

### <Example 6>

A biaxially stretched polypropylene film was obtained in the same manner as in Example 1 except that the cast sheet was stretched by a factor of 4.0 in the flow direction and that the lateral stretching temperature in stretching in the width direction was set to be 156°C.

### <Example 7>

A biaxially stretched polypropylene film was obtained in the same manner as in Example 1 except that the cast sheet was stretched by a factor of 4.0 in the flow direction and that the thickness of the biaxially stretched polypropylene film was set to be 2.5 um.

### <Example 8>

A biaxially stretched polypropylene film was obtained in the same manner as in Example 5 except that the cast sheet was stretched by a factor of 4.0 in the flow direction.

### <Example 9>

A biaxially stretched polypropylene film was obtained in the same manner as in Example 1 except that the stretching angle in stretching in the width direction was set to be 9.0° and that the lateral stretching temperature was set to be 156°C.

### <Example 10>

A biaxially stretched polypropylene film was obtained in the same manner as in Example 1 except that the non-stretched cast sheet 2 obtained in the Production Example 2 was used and that the lateral stretching temperature in stretching in the width direction was set to be 165°C.

### <Example 11>

A biaxially stretched polypropylene film was obtained in the same manner as in Example 1 except that the non-stretched cast sheet 2 obtained in the Production Example 2 was used and that the lateral stretching temperature in stretching in the width direction was set to be 167°C.

### <Comparative Example 1>

A biaxially stretched polypropylene film was obtained in the same manner as in Example 1 except that the lateral stretching temperature in stretching in the width direction was set to be 165°C.

### <Comparative Example 2>

A biaxially stretched polypropylene film was obtained in the same manner as in Example 1 except that the cast sheet was stretched by a factor of 5.0 in the flow direction and that the lateral stretching temperature in stretching in the width direction was set to be 165°C.

### <Comparative Example 3>

A biaxially stretched polypropylene film was obtained in the same manner as in Example 3 except that the lateral stretching temperature in stretching in the width direction was set to be 165°C.

### <Comparative Example 4>

A biaxially stretched polypropylene film was obtained in the same manner as in Example 3 except that the cast sheet was stretched by a factor of 5.0 in the flow direction and that the lateral stretching temperature in stretching in the width direction was set to be 165°C.

### <Comparative Example 5>

A biaxially stretched polypropylene film was taken up in the same manner as in Example 5 except that the lateral stretching temperature in stretching in the width direction was set to be 154°C. However, stretching fracture made it impossible to obtain a winding length needed in producing a capacitor, so that evaluation with a capacitor could not be made.

### <Comparative Example 6>

A biaxially stretched polypropylene film was obtained in the same manner as in Example 9 except that the stretching angle in stretching in the width direction was set to be 14°.

### <Comparative Example 7>

A biaxially stretched polypropylene film was taken up in the same manner as in Example 10 except that the lateral stretching temperature in stretching in the width direction was set to be 158°C. However, stretching fracture made it impossible to obtain a winding length needed in producing a capacitor, so that evaluation with a capacitor could not be made.

### <Comparative Example 8>

A biaxially stretched polypropylene film was obtained in the same manner as in Example 3 except that the stretching angle in stretching in the width direction was set to be 8.0° and that the lateral stretching temperature was set to be 156°C.

The evaluation results are shown in the following Table 2. Here, in the Table, "<" means being less. For example, "< 1" means being less than 1, and "< -10" means being less than -10. Also, in the Table, "/" means ÷. For example, T_{TD}/T_{MD} means a value of T_{TD} ÷ T_{MD}. Also, "-" in the Table 2 means that measurement was not made or measurement could not be made, and "[-]" means being unitless.

**[Table 1]**

| | Polypropylene resin | | | Longitudinal stretching ratio [-] | Lateral stretching temperature [°C] | Lateral stretching angle [degree] | Thickness [µm] |
|---|---|---|---|---|---|---|---|
| | Resin A [wt%] | Resin B1 [wt%] | Resin B2 [wt%] | | | | |
| Example 1 | 65 | 35 | - | 4.5 | 158 | 11 | 2.3 |
| Example 2 | 65 | 35 | - | 4.5 | 158 | 11 | 2.4 |
| Example 3 | 65 | 35 | - | 4.5 | 158 | 11 | 2.5 |
| Example 4 | 65 | 35 | - | 4.5 | 158 | 11 | 2.8 |
| Example 5 | 65 | 35 | - | 4.5 | 156 | 11 | 2.0 |
| Example 6 | 65 | 35 | - | 4.0 | 156 | 11 | 2.3 |
| Example 7 | 65 | 35 | - | 4.0 | 158 | 11 | 2.5 |
| Example 8 | 65 | 35 | - | 4.0 | 156 | 11 | 2.0 |
| Example 9 | 65 | 35 | - | 4.5 | 156 | 9 | 2.3 |
| Example 10 | 65 | - | 35 | 4.5 | 165 | 11 | 2.3 |
| Example 11 | 65 | - | 35 | 4.5 | 167 | 11 | 2.3 |
| Comparative Example 1 | 65 | 35 | - | 4.5 | 165 | 11 | 2.3 |
| Comparative Example 2 | 65 | 35 | - | 5.0 | 165 | 11 | 2.3 |
| Comparative Example 3 | 65 | 35 | - | 4.5 | 165 | 11 | 2.5 |
| Comparative Example 4 | 65 | 35 | - | 5.0 | 165 | 11 | 2.5 |
| Comparative Example 5 | 65 | 35 | - | 4.5 | 154 | 11 | 2.0 |
| Comparative Example 6 | 65 | 35 | - | 4.5 | 156 | 14 | 2.3 |
| Comparative Example 7 | 65 | - | 35 | 4.5 | 158 | 11 | 2.3 |
| Comparative Example 8 | 65 | 35 | - | 4.5 | 156 | 8 | 2.5 |

**[Table 2]**

| | Molecular orientation | Tensile strength | | | | Fracture point elongation | | | | Tensile elastic modulus | | | | Ra | Rmax | ΔC | Film-forming stability | | |
|---|---|---|---|---|---|---|---|---|---|---|---|---|---|---|---|---|---|---|---|
| | coefficient ΔNx | MD direction T_{MD} | TD direction T_{TD} | Sum of MD direction and TD direction T_{MD}+T_{TD} | TD/MD ratio T_{TD}/ T_{MD} | MD direction E_{MD} | TD direction E_{TD} | Sum of MD direction and TD direction E_{MD}+E_{TD} | TD/MD ratio E_{TD}/ E_{MD} | MD direction M_{MD} | TD direction M_{TD} | Sum of MD direction and TD direction M_{MD}+M_{TD} | TD/MD ratio M_{TD}/ M_{MD} | | | | Poor stretching occupancy | | Continuous productivity evaluation |
| | | | | | | | | | | | | | | | | | [%] | Evaluation results | |
| | [-] | [MPa] | [MPa] | [MPa] | [-] | [%] | [%] | [%] | [-] | [GPa] | [GPa] | [GPa] | [-] | [µm] | [µm] | [%] | | | |
| Example 1 | 0.0145 | 204 | 329 | 533 | 1.61 | 129 | 63 | 192 | 0.49 | 2.95 | 4.35 | 7.30 | 1.47 | 0.07 | 0.67 | -1.7 | <1 | A | A |
| Example 2 | 0.0138 | 179 | 307 | 486 | 1.72 | 111 | 62 | 173 | 0.56 | 2.69 | 4.35 | 7.04 | 1.62 | 0.05 | 0.60 | -1.0 | <1 | A | A |
| Example 3 | 0.0144 | 185 | 319 | 504 | 1.72 | 144 | 74 | 218 | 0.51 | 2.79 | 4.26 | 7.05 | 1.53 | 0.06 | 0.70 | -1.7 | <1 | A | A |
| Example 4 | 0.0145 | 184 | 311 | 495 | 1.69 | 134 | 63 | 197 | 0.47 | 2.42 | 3.73 | 6.15 | 1.54 | 0.06 | 0.64 | -1.0 | <1 | A | A |
| Example 5 | 0.0132 | 174 | 300 | 474 | 1.72 | 120 | 56 | 176 | 0.47 | 2.56 | 3.53 | 6.09 | 1.38 | 0.08 | 1.25 | -2.3 | 4.5 | B | B |
| Example 6 | 0.0152 | 195 | 334 | 529 | 1.71 | 130 | 59 | 189 | 0.45 | 3.00 | 4.83 | 7.83 | 1.61 | 0.06 | 0.59 | -4.6 | 2.7 | B | A |
| Example 7 | 0.0153 | 173 | 310 | 483 | 1.79 | 122 | 60 | 182 | 0.49 | 2.56 | 3.45 | 6.01 | 1.35 | 0.07 | 1.09 | -1.9 | 2.7 | B | A |
| Example 8 | 0.0144 | 196 | 320 | 516 | 1.63 | 131 | 56 | 187 | 0.43 | 2.98 | 4.10 | 7.08 | 1.38 | 0.08 | 1.10 | -2.3 | 1.8 | A | A |
| Example 9 | 0.0147 | 206 | 317 | 523 | 1.54 | 132 | 51 | 183 | 0.39 | 2.51 | 2.82 | 5.33 | 1.12 | 0.08 | 0.86 | -2.2 | <1 | A | A |
| Example 10 | 0.0149 | 195 | 324 | 519 | 1.66 | 126 | 64 | 190 | 0.51 | 2.71 | 3.98 | 6.69 | 1.47 | 0.06 | 0.60 | -0.3 | 3.6 | B | A |
| Example 11 | 0.0156 | 213 | 335 | 548 | 1.57 | 135 | 72 | 207 | 0.53 | 2.92 | 3.50 | 6.42 | 1.20 | 0.05 | 0.63 | -3.7 | 2.8 | B | A |
| Comparative Example 1 | 0.0162 | 197 | 320 | 517 | 1.62 | 124 | 55 | 179 | 0.44 | - | - | - | - | 0.05 | 0.67 | <-10 | 6.0 | B | A |
| Comparative Example 2 | 0.0120 | 214 | 329 | 543 | 1.54 | 129 | 63 | 192 | 0.49 | 2.95 | 2.35 | 5.30 | 0.80 | 0.07 | 0.67 | -1.6 | 8.2 | C | B |
| Comparative Example 3 | 0.0165 | 202 | 327 | 529 | 1.62 | 150 | 57 | 207 | 0.38 | - | - | - | - | 0.04 | 0.57 | -6.8 | 6.0 | B | A |
| Comparative Example 4 | 0.0127 | 222 | 337 | 559 | 1.52 | 122 | 65 | 187 | 0.53 | 2.88 | 4.00 | 6.88 | 1.39 | 0.06 | 0.57 | -0.4 | 8.2 | C | B |
| Comparative Example 5 | 0.0126 | - | - | - | - | - | - | - | - | - | - | - | - | - | - | - | 9.0 | C | C |
| Comparative Example 6 | 0.0129 | 197 | 275 | 472 | 1.40 | 129 | 39 | 168 | 0.30 | 1.81 | 3.42 | 5.23 | 1.89 | 0.06 | 0.86 | <-10 | 7.3 | C | B |
| Comparative Example 7 | 0.0117 | - | - | - | - | - | - | - | - | - | - | - | - | - | - | - | 9.0 | C | C |
| Comparative Example 8 | 0.0164 | 201 | 336 | 537 | 1.67 | 141 | 61 | 202 | 0.43 | 2.91 | 3.89 | 6.80 | 1.34 | 0.05 | 0.65 | -9.0 | 1.9 | A | A |

## Claims

1. A biaxially stretched polypropylene film comprising a polypropylene resin, the biaxially stretched polypropylene film having a thickness of 1.0 to 3.0 µm and having a molecular orientation coefficient ΔNx of 0.0130 to 0.0160, as calculated according to formula (1): $Molecular orientation coefficient ΔNx = \left(ΔNxy+ΔNxz\right) / 2$ (1)
on a basis of a birefringence value ΔNxy in a slow axis direction with respect to a fast axis direction and a birefringence value ΔNxz in the slow axis direction with respect to a thickness direction, as measured via optical birefringence measurement in accordance with the description,
wherein the biaxially stretched polypropylene film is obtainable by a production method including, in this order, the following steps 1 to 4:
(1) step 1 of heating and melting a resin composition containing a polypropylene raw material resin,
(2) step 2 of extruding the heated and melted resin composition,
(3) step 3 of cooling and solidifying the extruded resin composition to obtain a cast sheet, and
(4) step 4 of stretching the cast sheet in a flow direction and in a width direction, wherein, in step 4, the longitudinal stretching ratio is 3 to 4.7, the lateral stretching angle is 8.5° to 13.5°, and the lateral stretching temperature is higher than 140°C and 180°C or lower.

2. The biaxially stretched polypropylene film according to claim 1, which is for capacitors.

3. The biaxially stretched polypropylene film according to claim 1 or 2, wherein a ratio M_{TD}/M_{MD} of a tensile elastic modulus in a TD direction and a tensile elastic modulus in an MD direction is 0.85 or more and 1.8 or less, wherein the tensile elastic modulus is measured in accordance with the description.

4. The biaxially stretched polypropylene film according to any one of claims 1 to 3, comprising a polypropylene resin A having a difference (D_{M}), as obtained by subtracting a differential distribution value when a logarithmic molecular weight Log(M) = 6.0 from a differential distribution value when Log(M) = 4.5 on a molecular weight distribution curve, of 10% or more and 18% or less based on 100% of the differential distribution value when Log(M) = 6.0, wherein the differential distribution value is measured in accordance with the description.

5. The biaxially stretched polypropylene film according to any one of claims 1 to 4, comprising a polypropylene resin B having a difference (D_{M}), as obtained by subtracting a differential distribution value when a logarithmic molecular weight Log(M) = 6.0 from a differential distribution value when Log(M) = 4.5 on a molecular weight distribution curve, of -1% or more and less than 10% based on 100% of the differential distribution value when Log(M) = 6.0.

6. The biaxially stretched polypropylene film according to any one of claims 1 to 5, wherein a tensile strength is 450 MPa or more and 700 MPa or less, in terms of the sum of the tensile strength in the MD direction (T_{MD}) and the tensile strength in the TD direction (T_{TD}), wherein the tensile strength is measured in accordance with JIS-C2151.

7. The biaxially stretched polypropylene film according to any one of claims 1 to 6, wherein a ratio of the tensile strength in the TD direction to the tensile strength in the MD direction (T_{TD}/T_{MD}) of the tensile strength is 1.00 or more and 2.00 or less.

8. The biaxially stretched polypropylene film according to any one of claims 1 to 7, wherein a fracture elongation is 100% or more and 300% or less, in terms of the sum of the fracture elongation in the MD direction (E_{MD}) and the fracture elongation in the TD direction (E_{TD}), wherein the fracture elongation is measured in accordance with JIS K-7127 edition 1999.

9. The biaxially stretched polypropylene film according to any one of claims 1 to 8, wherein a ratio of the fracture elongation in the TD direction to the fracture elongation in the MD direction (E_{TD}/E_{MD}) of the fracture elongation is 0.2 or more and 0.95 or less.

10. The biaxially stretched polypropylene film according to any one of claims 1 to 9, wherein a tensile elastic modulus is 3 GPa or more and 10 GPa or less, in terms of the sum of the tensile elastic modulus in the MD direction (M_{MD}) and the tensile elastic modulus in the TD direction (M_{TD}).

11. A metallized film having a metal film on one surface or on both surfaces of a biaxially stretched polypropylene film according to any one of claims 1 to 10.

12. A capacitor comprising a metallized film according to claim 11.

## Patentansprüche

1. Biaxial gestreckte Polypropylenfolie, umfassend ein Polypropylenharz, wobei die biaxial gestreckte Polypropylenfolie eine Dicke von 1,0 bis 3,0 µm aufweist und einen molekularen Orientierungskoeffizienten ΔNx von 0,0130 bis 0,0160 aufweist, berechnet gemäß Formel (1): $Molekularer Orientierungskoeffizient ΔNx = \left(ΔNxy+ΔNxz\right) / 2$ (1)
anhand eines Doppelbrechnungswerts ΔNxy in einer langsame Achse-Richtung in Bezug auf eine schnelle Achse-Richtung und eines Doppelbrechnungswerts ΔNxz in der langsame Achse-Richtung in Bezug auf eine Dickenrichtung, gemessen durch optische Doppelbrechungsmessung gemäß der Beschreibung, wobei die biaxial gestreckte Polypropylenfolie durch ein Herstellungsverfahren erhältlich ist, das in dieser Reihenfolge die folgenden Schritte 1 bis 4 einschließt:
(1) Schritt 1 des Erwärmens und Schmelzens einer Harzzusammensetzung, enthaltend ein Polypropylenausgangsmaterialharz,
(2) Schritt 2 des Extrudierens der erwärmten und geschmolzenen Harzzusammensetzung,
(3) Schritt 3 des Kühlens und Verfestigens der extrudierten Harzzusammensetzung, um eine Gussbahn zu erhalten,
(4) Schritt 4 des Streckens der Gussbahn in einer Fließrichtung und in einer Breitenrichtung,
wobei, im Schritt 4, das Längsstreckungsverhältnis 3 bis 4,7 beträgt, der seitliche Streckungswinkel 8,5° bis 13,5° beträgt und die seitliche Streckungstemperatur größer als 140°C und 180°C oder niedriger ist.

2. Biaxial gestreckte Polypropylenfolie nach Anspruch 1, die für Kondensatoren bestimmt ist.

3. Biaxial gestreckte Polypropylenfolie nach Anspruch 1 oder 2, wobei ein Verhältnis M_{TD}/M_{MD} von einem Zug-Elastizitätsmodul in einer TD-Richtung und einem Zug-Elastizitätsmodul in einer MD-Richtung 0,85 oder mehr und 1,8 oder weniger beträgt, wobei das Zug-Elastizitätsmodul gemäß der Beschreibung gemessen wird.

4. Biaxial gestreckte Polypropylenfolie nach einem der Ansprüche 1 bis 3, umfassend ein Polypropylenharz A mit einer Differenz (D_{M}), erhalten durch Subtrahieren eines Differenzialverteilungswerts bei einem logarithmischen Molekulargewicht Log (M) = 6,0 von einem Differenzialverteilungswert bei Log (M) = 4,5 auf einer Molekulargewichtsverteilungskurve, von 10% oder mehr und 18% oder weniger, basierend auf 100% des Differenzialverteilungswerts bei Log(M) = 6,0, wobei der Differenzialverteilungswert gemäß der Beschreibung gemessen wird.

5. Biaxial gestreckte Polypropylenfolie nach einem der Ansprüche 1 bis 4, umfassend ein Polypropylenharz B mit einer Differenz (D_{M}), erhalten durch Subtrahieren eines Differenzialverteilungswerts bei einem logarithmischen Molekulargewicht Log (M) = 6,0 von einem Differenzialverteilungswert bei Log (M) = 4,5 auf einer Molekulargewichtsverteilungskurve, von -1% oder mehr und weniger als 10%, basierend auf 100% des Differenzialverteilungswerts bei Log(M) = 6,0.

6. Biaxial gestreckte Polypropylenfolie nach einem der Ansprüche 1 bis 5, wobei eine Zugfestigkeit in Bezug auf die Summe der Zugfestigkeit in der MD-Richtung (T_{MD}) und der Zugfestigkeit in der TD-Richtung (T_{TD}) 450 MPa oder mehr und 700 MPa oder weniger beträgt, wobei die Zugfestigkeit gemäß JIS-C2151 gemessen wird.

7. Biaxial gestreckte Polypropylenfolie nach einem der Ansprüche 1 bis 6, wobei ein Verhältnis der Zugfestigkeit in der TD-Richtung zu der Zugfestigkeit in der MD-Richtung (T_{TD}/T_{MD}) der Zugfestigkeit 1,00 oder mehr und 2,00 oder weniger beträgt.

8. Biaxial gestreckte Polypropylenfolie nach einem der Ansprüche 1 bis 7, wobei eine Bruchdehnung in Bezug auf die Summe der Bruchdehnung in der MD-Richtung (E_{MD}) und der Bruchdehnung in der TD-Richtung (E_{TD}) 100% oder mehr und 300% oder weniger beträgt, wobei die Bruchdehnung gemäß JIS K-7127 Ausgabe 1999 gemessen wird.

9. Biaxial gestreckte Polypropylenfolie nach einem der Ansprüche 1 bis 8, wobei ein Verhältnis der Bruchdehnung in der TD-Richtung zu der Bruchdehnung in der MD-Richtung (E_{TD}/E_{MD}) der Bruchdehnung 0,2 oder mehr und 0,95 oder weniger beträgt.

10. Biaxial gestreckte Polypropylenfolie nach einem der Ansprüche 1 bis 9, wobei ein Zug-Elastizitätsmodul in Bezug auf die Summe des Zug-Elastizitätsmoduls in der MD-Richtung (M_{MD}) und des Zug-Elastizitätsmoduls in der TD-Richtung (M_{TD}) 3 GPa oder mehr und 10 GPa oder weniger beträgt.

11. Metallisierte Folie, aufweisend einen Metallfilm auf einer Oberfläche oder auf beiden Oberflächen von einer biaxial gestreckten Polypropylenfolie nach einem der Ansprüche 1 bis 10.

12. Kondensator, umfassend eine metallisierte Folie nach Anspruch 11.

## Revendications

1. Film de polypropylène étiré de manière biaxiale comprenant une résine de polypropylène, le film de polypropylène étiré de manière biaxiale ayant une épaisseur allant de 1,0 à 3,0 µm et un coefficient d'orientation moléculaire ΔNx allant de 0,0130 à 0,0160, tel que calculé suivant la formule (1) : $coefficient d ′ orientation moléculaire ΔNx = \left(ΔNxy+ΔNxz\right) / 2$ (1)
sur base d'une valeur de biréfringence ΔNxy dans la direction de l'axe lent par rapport à la direction de l'axe rapide et une valeur de biréfringence ΔNxz dans la direction de l'axe lent par rapport au sens de l'épaisseur, telle que mesurée par mesure de biréfringence optique conformément à la description,
dans lequel le film de polypropylène étiré de manière biaxiale peut s'obtenir par un procédé de production comprenant, dans cet ordre, les étapes suivantes 1 à 4 :
(1) étape 1 de chauffage et de fusion d'une composition de résine contenant une résine en matière première de polypropylène,
(2) étape 2 d'extrusion de la composition de résine chauffée et mise en fusion,
(3) étape 3 de refroidissement et de solidification de la composition de résine extrudée pour obtenir une feuille coulée, et
(4) étape 4 d'étirement de la feuille coulée dans la direction de coulée et dans le sens de la largeur,
dans lequel, à l'étape 4, le rapport d'étirement longitudinal va de 3 à 4,7, l'angle d'étirement latéral va de 8,5° à 13,5°, et
la température d'étirement latéral est supérieure à 140°C et de 180°C ou moins.

2. Film de polypropylène étiré de manière biaxiale selon la revendication 1, lequel est destiné à des condensateurs.

3. Film de polypropylène étiré de manière biaxiale selon la revendication 1 ou 2, dans lequel le rapport M_{TD}/M_{MD} du module d'élasticité à la traction dans la direction TD et le module d'élasticité à la traction dans la direction MD est de 0,85 ou plus et de 1,8 ou moins, dans lequel le module d'élasticité à la traction est mesuré conformément à la description.

4. Film de polypropylène étiré de manière biaxiale selon l'une quelconque des revendications 1 à 3, comprenant une résine de polypropylène A avec une différence (D_{M}), telle qu'obtenue par soustraction d'une valeur de distribution différentielle quand un poids moléculaire logarithmique Log (M) = 6,0 d'une valeur de distribution différentielle quand Log (M) = 4,5 sur une courbe de distribution des poids moléculaires, de 10% ou plus et de 18% ou moins sur base de 100% de la valeur de distribution différentielle quand Log (M) = 6,0, dans lequel la valeur de distribution différentielle est mesurée conformément à la description.

5. Film de polypropylène étiré de manière biaxiale selon l'une quelconque des revendications 1 à 4, comprenant une résine de polypropylène B ayant une différence (D_{M}), telle qu'obtenue par soustraction d'une valeur de distribution différentielle quand un poids moléculaire logarithmique Log (M) = 6,0 d'une valeur de distribution différentielle quand Log (M) = 4,5 sur une courbe de distribution de poids moléculaires, de -1% ou plus et moins que 10%, sur base de 100% de la valeur de distribution différentielle quand Log (M) = 6,0.

6. Film de polypropylène étiré de manière biaxiale selon l'une quelconque des revendications 1 à 5, dans lequel la résistance à la traction est de 450 MPa ou plus et de 700 MPa ou moins, en termes de somme de la résistance à la traction dans la direction MD (T_{MD}) et la résistance à la traction dans la direction TD (T_{TD}), dans lequel la résistance à la traction est mesurée conformément à JIS-C2151.

7. Film de polypropylène étiré de manière biaxiale selon l'une quelconque des revendications 1 à 6, dans lequel le rapport de la résistance à la traction dans la direction TD à la résistance à la traction dans la direction MD (T_{TD}/T_{MD}) de la résistance à la traction est de 1,00 ou plus et de 2,00 ou moins.

8. Film de polypropylène étiré de manière biaxiale selon l'une quelconque des revendications 1 à 7, dans lequel un allongement à la cassure est de 100% ou plus et de 300% ou moins, en termes de somme de l'allongement à la cassure dans la direction MD (E_{MD}) et l'allongement à la cassure dans la direction TD (E_{TD}), dans lequel l'allongement à la cassure est mesuré conformément à JIS K-7127 édition 1999.

9. Film de polypropylène étiré de manière biaxiale selon l'une quelconque des revendications 1 à 8, dans lequel le rapport d'allongement à la cassure dans la direction TD à allongement à la cassure dans la direction MD (E_{TD}/E_{MD}) de l'allongement à la cassure, est de 0,2 ou plus et de 0,95 ou moins.

10. Film de polypropylène étiré de manière biaxiale selon l'une quelconque des revendications 1 à 9, dans lequel le module d'élasticité à la traction est de 3 GPa ou plus et de 10 GPa ou moins, en termes de somme du module d'élasticité à la traction dans la direction MD (M_{MD}) et le module d'élasticité à la traction dans la direction TD (M_{TD}).

11. Film métallisé ayant un film métallique sur une surface ou sur les deux surfaces d'un film de polypropylène étiré de manière biaxiale selon l'une quelconque des revendications 1 à 10.

12. Condensateur comprenant un film métallisé selon la revendication 11.
